# EUROPÄISCHE PATENTSCHRIFT

(11) **EP 3 436 732 B1**
(45) Veröffentlichungstag und Bekanntmachung des Hinweises auf die Patenterteilung: **26.01.2022**
(21) Anmeldenummer: 17721955.7
(22) Anmeldetag: 31.03.2017
(51) Int. Cl.: F16L 53/00, H05B 3/56, H05B 3/58

(54) **KONFEKTIONIERTE BEHEIZBARE MEDIENLEITUNG**
PRE-FABRICATED HEATABLE MEDIA LINE
CONDUITE DE FLUIDE CHAUFFANTE ASSEMBLÉE

(30) Priorität: 31.03.2016 DE 102016003706
(43) Veröffentlichungstag der Anmeldung: 06.02.2019
(73) Patentinhaber: Voss Automotive GmbH, 51688 Wipperfürth (DE)
(72) Erfinder: SCHWARZKOPF, Otfried, 51515 Kürten (DE); ETSCHEID, Tobias, 51789 Lindlar (DE)
(74) Vertreter: Rebbereh, Cornelia
(86) Internationale Anmeldenummer: PCT/EP2017/000395
(87) Internationale Veröffentlichungsnummer: WO 2017/167452

(56) Entgegenhaltungen:
- WO-A1-2015/090662
- WO-A1-2016/096113
- WO-A1-2016/155988
- DE-A1- 10 137 976
- DE-A1-102010 032 189
- DE-A1-102011 120 358
- DE-A1-102014 012 851

## Beschreibung

Die Erfindung betrifft eine konfektionierte beheizbare Medienleitung mit zumindest einer rohr- und/oder schlauchförmigen Medienleitung, zumindest einem endseitig an dieser angeordneten Leitungsverbinder und mit zumindest einem konfektionierten Heizelement, wobei das Heizelement zwei Teil-Heizelemente umfasst, die in zumindest einer Schaltung verbunden sind, und zumindest eines der Teil-Heizelemente sich über zumindest einen Teil des zumindest einen Leitungsverbinders und die zumindest eine rohr- und/oder schlauchförmige Medienleitung hinweg erstreckt zum Beheizen des zumindest einen Teils des Leitungsverbinders und der zumindest einen rohr- und/oder schlauchförmigen Medienleitung, sowie ein konfektioniertes Heizelement zur Verwendung in einer solchen konfektionierten beheizbaren Medienleitung.

Konfektionierte beheizbare Medienleitungen sind ebenso wie konfektionierte Heizelemente im Stand der Technik bekannt. Eine solche konfektionierte beheizbare Medienleitung umfasst zumindest eine Medienleitung, die rohrförmig und/oder schlauchförmig sein kann, und zumindest einen endseitig an dieser angeordneten Leitungsverbinder. Die Medienleitung umfasst zumeist zumindest eine Wandung, die einen inneren Hohlraum bzw. ein inneres Leitungslumen außenseitig umgrenzt. Durch das innere Leitungslumen der Medienleitung kann Medium strömen. Leitungsverbinder dienen zum Verbinden zumindest zweier Medienleitungen oder zur Anschlussverbindung einer Medienleitung mit einem beliebigen Aggregat.

Insbesondere in Fahrzeugen sind solche konfektionierten beheizbaren Medienleitungen zum Leiten von zumindest in einem Aggregatzustand flüssigen Medien vorgesehen. Durch die konfektionierte beheizbare Medienleitung werden oftmals Medien geleitet, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Wasserleitungen für Scheibenwaschanlagen der Fall, ebenso wie bei konfektionierten beheizbaren Medienleitungen, mittels derer wässrige Harnstofflösung als Medium transportiert wird, die als NOₓ-Reaktionsadditiv für Dieselmotoren mit sogenannten SCR-Katalysatoren eingesetzt werden. Um ein Einfrieren des Mediums in der konfektionierten beheizbaren Medienleitung bei niedrigen Temperaturen zu vermeiden oder ein bereits gefrorenes Medium in der konfektionierten Medienleitung wieder aufzutauen, wird eine Beheizung vorgesehen. Zum Beheizen der Medienleitung und/oder des zumindest einen Leitungsverbinders ist es bekannt, ein konfektioniertes Heizelement vorzusehen, das außenseitig um die Medienleitung und/oder den Leitungsverbinder herumgewunden oder beispielsweise in der Wandung der Medienleitung angeordnet wird/ist, um ein Beheizen des durch das innere Leitungslumen der Medienleitung und des zumindest einen endseitig an dieser angeordneten Leitungsverbinders strömenden Mediums zu ermöglichen.

Je nach Anordnung des bzw. der jeweiligen endseitig an der Medienleitung angeordneten Leitungsverbinder bzw. der konfektionierten beheizbaren Medienleitung insbesondere in einem Fahrzeug, beispielsweise im Bereich des Fahrzeugmotors oder im Bereich des Fahrzeugtanks herrschen unterschiedliche Temperaturbedingungen und dementsprechend besteht ein unterschiedlicher Wärmebedarf insbesondere im Bereich der Leitungsverbinder der konfektionierten beheizbaren Medienleitung. Ein kaltes Ende der konfektionierten beheizbaren Medienleitung wird im Bereich eines Fahrzeugtanks und ein warmes Ende im Bereich einer Dosierstelle einer Einspritzeinrichtung, also abgasstrangnah bzw. motornah, zu finden sein, so dass vorteilhaft eine unterschiedliche Leistungseinkopplung an den beiden Leitungsverbindern der konfektionierten beheizbaren Medienleitung vorgesehen wird. Im bezüglich der Umgebungstemperatur heißen bzw. wärmeren Bereich, in dem die konfektionierte beheizbare Medienleitung angeordnet ist, also abgasstrangnah bzw. motornah, reicht häufig bereits die dort vorhandene Wärmestrahlung zum Erwärmen des durch die konfektionierte beheizbare Medienleitung strömenden Mediums aus, also insbesondere zum Auftauen des Mediums bei niedrigen Umgebungstemperaturen außerhalb des Fahrzeugs. Um dies zu erreichen, ist es im Stand der Technik bekannt, eine unterschiedliche Anzahl von Wicklungen und/oder eine unterschiedliche Anordnung der Heizelemente an den beiden Leitungsverbindern, die endseitig an der zumindest einen Medienleitung angeordnet sind, vorzusehen. Bei einer gleichen Anzahl von Heizelementen an den beiden Leitungsverbindern kann eine Leistungseinkopplung dort beispielsweise durch Vorsehen einer unterschiedlichen Steigung der Heizelemente und/oder eine unterschiedliche Anordnung bzw. Führung der Heizelemente an den Leitungsverbindern variiert werden. Dies ist beispielsweise aus der DE 10 2011 120 358 A1 bekannt.

Gemäß dieser Druckschrift des Standes der Technik können einerseits unterschiedliche Heizelemente an den beiden Leitungsverbindern vorgesehen sein und/oder die Heizelemente in Bereichen der beiden Leitungsverbinder einen unterschiedlichen Widerstand aufweisen. Ein unterschiedlicher Wärmebedarf im Bereich der beiden Leitungsverbinder der konfektionierten beheizbaren Medienleitung kann somit durch unterschiedliche Leistungseinkopplung im Bereich der beiden Leitungsverbinder gedeckt werden. Liegt beispielsweise an einem Leitungsverbinder, somit an einem Ende der konfektionierten beheizbaren Medienleitung, ein Heißbereich vor, wie beispielsweise im Bereich einer motor- bzw. abgasstrangnahen Dosierstelle, wird gemäß der DE 10 2011 120 358 A1 ein Heizelement mit einem niedrigeren Widerstand als an dem anderen Leitungsverbinder, also dem anderen Ende der konfektionierten beheizbaren Medienleitung, verwendet, der in einem Kaltbereich, beispielsweise im Bereich eines Fahrzeugtanks, angeordnet ist. Dort kann das zweite Heizelement somit einen vergleichsweise hohen Widerstand aufweisen. Eine Variation der Wärmeeinkopplung ist ferner dadurch offenbart, dass an einem der beiden Leitungsverbinder die sich entlang der Medienleitung erstreckenden Heizelemente zum Anordnen auf dem Leitungsverbinder vorgesehen sind und ein drittes Heizelement zum Anordnen auf dem anderen Leitungsverbinder, wobei das dritte Heizelement mit den beiden anderen Heizelementen verbunden ist. Ferner ist offenbart, dass lediglich ein oder zwei Heizelemente an oder auf nur einem Leitungsverbinder angeordnet sein können, um lediglich diesen zu beheizen.

An den beiden Leitungsverbindern der konfektionierten beheizbaren Medienleitung können somit ähnliche, gleiche oder unterschiedliche Anforderungen bezüglich des Wärmebedarfs herrschen. Auch die Leitungsverbinder selbst können höchst unterschiedlich ausgebildet sein, was deren Abmessungen und Formgebung, die winklig oder gerade sein kann, anbelangt. Im Sinne einer Kosteneinsparung sollte die Varianz hier jedoch so klein wie möglich sein. Unabhängigkeit von der jeweiligen Ausgestaltung des Leitungsverbinders kann daher bei vorgegebener Heizelementlänge und Querschnittsfläche des Heizelements sowie Rippenstruktur auf der Außenseite des Leitungsverbinders, in der das Heizelement angeordnet wird, der Widerstand bzw. der spezifische Widerstand des Heizelementes variiert werden. Um Kosten einzusparen, soll eine möglichst geringe Anzahl an Heizelementen bzw. Teil-Heizelementen vorgesehen werden, die sich entlang der Medienleitung und des zumindest einen endseitigen dieser angeordneten Leitungsverbinders erstrecken. Auch zum Beheizen der Medienleitung selbst sind üblicherweise Vorgaben zu berücksichtigen, wie der spezifische Widerstand des Heizelementes sowie dessen Querschnittsfläche.

Beim Anordnen des Heizelements bzw. der Teil-Heizelemente entlang der Medienleitung kann deren Länge ggf. variiert werden durch Variation der Steigung bzw. der Wicklungen bei einem spiralförmigen Wickeln der Medienleitung, wie dies beispielsweise in der DE 10 2010 032 189 A1 offenbart ist. Als problematisch erweist es sich beim Variieren der Steigung lediglich, dass bei einer zu großen Steigung ein Formbiegen der Medienleitung zu einem Abheben des Heizelementes bzw. Teil-Heizelementes von deren Oberfläche vorkommen kann und bei einer zu geringen Steigung der Wicklung der Medienleitung mit dem zumindest einen Heizelement bzw. Teil-Heizelement die Kosten stark ansteigen, da eine sehr viel größere Heizelementlänge bzw. Teil-Heizelementlänge benötigt wird als bei einer geringeren Steigung der Wicklung. Es ist bei zwei Teil-Heizelementen, die entlang der Medienleitung durch deren Umwickeln angeordnet werden, erforderlich, dass beide mit etwa der gleichen Steigung der Wicklung auf der Medienleitung angeordnet werden, um ein Überkreuzen der Teil-Heizelemente beim Wickeln zu vermeiden.

Aus der DE 10 2014 012 851 A1 ist ein Leitungsverbinder mit zumindest einem ersten Anschlussabschnitt zum Verbinden mit einer ersten Medienleitung, einem zweiten Anschlussabschnitt zum Verbinden mit einer zweiten Medienleitung und/oder einem Aggregat und einem die Anschlussabschnitte miteinander verbindenden und zwischen diesen angeordneten mittleren Abschnitt bekannt, wobei der Leitungsverbinder als Kunststoff-Formteil ausgebildet ist und zumindest eine Wandung und zumindest einen von dieser umgebenen inneren Strömungskanal aufweist. Der Leitungsverbinder ist in zumindest einem Teilbereich des mittleren Abschnitts mit zumindest einer Heizlitze oder einem Heizdraht zum elektrischen Beheizen bewickelt, wobei die Heizlitze oder der Heizdraht zumindest eine Litze oder zumindest einen Draht und eine diese oder diesen umgebende Isolationsummantelung aufweist. Die zumindest eine Heizlitze oder der zumindest eine Heizdraht ist in dem mittleren Bereich des Leitungsverbinders an diesen durch ein Befestigungsmittel adhesiv fixiert und befestigt.

Die WO 2015/090662 A1 offenbart einen beheizbaren elastomeren Hohlkörper, insbesondere einen beheizbaren Schlauch, zur Leitung und/oder Aufnahme flüssiger, gasförmiger oder pastöser Medien, mit einem elektrisch leitfähigen Heizleiter. Der elektrisch leitfähige Heizleiter weist ein metallisches Litzenelement und ein nicht-metallisches Litzenelement auf. Das nicht-metallische Litzenelement dient der Übertragung von Zugkräften des Heizleiters und die Kupferlitzen als metallische Litzenelemente der Abgabe ihrer elektrischen Stromwärmeverluste an die umliegenden Schichten des Schlauchs sowie an dessen zu transportierendes Medium.

Aus der DE 101 37 976 A1, sind eine Litze, insbesondere für eine Sitzheizung für ein Kraftfahrzeug, und ein Verfahren zum Einstellen gewünschter elektrischer Eigenschaften der Litze bekannt. Hierbei sollen für einen Heizdraht einer Sitzheizung eines Kraftfahrzeugs die elektrischen, thermischen und/oder mechanischen Eigenschaften an die Anforderungen eines 42-Volt-Bord Netzes angepasst werden. Dementsprechend umfasst eine den Heizdraht bildende Litze eine Kombination mehrerer Arten von Einzeldrähten, wobei zum Einstellen der gewünschten Eigenschaften der Litze die einzelnen Arten der einzelnen Drähte unterschiedliche Eigenschaften aufweisen.

Die WO 2012/096113 A1 offenbart eine beheizbare Medienleitung mit einer rohrförmigen Medienleitung, zumindest einem Heizelement in außenseitiger Anordnung auf der rohrförmigen Medienleitung und zumindest einer Fixiereinrichtung zum Fixieren der Position des zumindest einen Heizelements auf der Außenseite der rohrförmigen Medienleitung. Hierbei ist zumindest ein hochtemperaturfestes Folienelement vorgesehen zum Verhindern des Anhaftens von Fixiermittel auf der Außenseite der rohrförmigen Medienleitung. Bei der Herstellung der beheizbaren Medienleitung wird zunächst die rohrförmige Medienleitung mit dem zumindest einem Heizelement außenseitig versehen, insbesondere bewickelt, nachfolgend auf der Außenseite der rohrförmigen Medienleitung über und/oder unter der Bewicklung von dieser mit dem zumindest einen Heizelement zumindest ein hochtemperaturfestes Folienelement aufgebracht, um ein vergleichsweise einfaches und schnelles Konfektionieren der beheizbaren Medienleitung ohne die Notwendigkeit eines Entfernens von Fixiermittelresten von der Außenseite der Medienleitung vor dem Konfektionieren zu ermöglichen.

Aus Kostengründen erweist es sich als sinnvoll, die Querschnittsfläche des Heizelementes bzw. Teil-Heizelementes so gering wie möglich auszubilden, hierbei jedoch ein noch fertigbares Heizelement vorzusehen, wobei aus Fertigungsgründen beim Vorsehen mehrerer Teil-Heizelemente ein etwa einheitlicher Heizelementquerschnitt bzw. eine etwa einheitliche Querschnittsfläche der Teil-Heizelemente vorteilhaft wäre, um ein problemloses Verbinden der Teil-Heizelemente beispielsweise durch Crimpen, Aufschrumpfen oder Wickeln zu ermöglichen.

Der vorliegenden Erfindung liegt daher die Aufgabe zugrunde, eine konfektionierte beheizbare Medienleitung sowie ein konfektioniertes Heizelement zur Verwendung in einer solchen vorzusehen, bei denen eine möglichst minimale Querschnittsfläche des Heizelementes bzw. der Teil-Heizelemente sowie ähnliche oder gleiche Durchmesser von zu verbindenden Teil-Heizelementen vorgesehen werden können und zugleich ein unterschiedlicher Wärmebedarf entlang der konfektionierten beheizbaren Medienleitung, insbesondere im Bereich des zumindest einen Leitungsverbinders und der Medienleitung, gedeckt werden kann.

Die Aufgabe wird für eine konfektionierte beheizbare Medienleitung mit den Merkmalen des Anspruchs 1 gelöst. Für ein Verfahren zum Fixieren zumindest eines konfektionierten Heizelements auf einer Medienleitung zum Ausbilden einer solchen konfektionierten beheizbaren Medienleitung wird die Aufgabe mit den Merkmalen des Anspruchs 11 gelöst. Weiterbildungen der Erfindung sind in den abhängigen Ansprüchen definiert.

Dadurch werden eine konfektionierte beheizbare Medienleitung sowie ein konfektioniertes Heizelement zur Verwendung in einer solchen konfektionierten beheizbaren Medienleitung geschaffen, bei denen durch die Verwendung einer Mischlitze ein selektives Einstellen bzw. Auswählen des spezifischen Widerstandes des Heizelementes bzw. Teil-Heizelementes ermöglicht wird. Hierdurch ist somit ein Freiheitsgrad über selektives Einstellen des spezifischen Widerstandes bei vorgebbarem minimiertem Durchmesser bzw. vorgebbarer minimierter Querschnittsfläche eines Teil-Heizelementes möglich. Durch die Verwendung zumindest eines als Mischlitze ausgebildeten Teil-Heizelementes, die also eine Anzahl von verseilten, aus zumindest zwei unterschiedlichen Materialien bestehenden Einzeldrähten aufweist, kann durch Varianz dieser Einzeldrähte der gewünschte spezifische Widerstand des Teil-Heilelementes eingestellt werden. Der spezifische Widerstand ist materialabhängig, so dass durch Wahl unterschiedlicher Materialien für die Einzeldrähte der Mischlitze der spezifische Widerstand von dieser, somit dieses Teil-Heizelements eingestellt werden kann. Da der Widerstand R des Teil-Heizelementes eine Funktion aus spezifischem Widerstandes p, der Länge I des Teil-Heizelementes und von dessen Querschnittsfläche A ist nach R = (p x I) / A, wird durch die Möglichkeit eines Variierens des spezifischen Widerstandes des Teil-Heizelementes ein Freiheitsgrad geschaffen, wenn die Länge des Teil-Heizelementes und dessen Querschnittsfläche vorgegeben und dementsprechend für die jeweilige Anwendung konstant gehalten werden. Ein unterschiedlicher Wärmebedarf entlang der konfektionierten beheizbaren Medienleitung kann somit durch Variieren des jeweiligen spezifischen Widerstandes der Teil-Heizelemente durch entsprechend unterschiedliche Materialwahl von deren Einzeldrähten und dementsprechend durch unterschiedlichen Wärmeeintrag über die Teil-Heizelemente in die Medienleitung und den oder die Leitungsverbinder der konfektionierten beheizbaren Medienleitung gedeckt werden.

Dies ist bei Vorsehen eines bekannten Heizelements, das lediglich einen Heizdraht aus einem bestimmten Material oder eine Heizlitze mit einer Anzahl von Einzeldrähten, die alle aus demselben Material bestehen, nicht möglich, da dieses eine Material nur einen bestimmten spezifischen Widerstand aufweist. Ein Variieren ist lediglich durch Wahl eines Heizelements mit einem Heizdraht oder einer Heizlitze mit Einzeldrähten aus einem anderen Werkstoff bzw. Material möglich. Dies ist jedoch mit hohen Kosten durch Bevorraten von einer großen Anzahl von Heizelementen bzw. Teil-Heizelementen aus jeweils unterschiedlichen Materialien möglich.

Durch die Variation der Materialien der Einzeldrähte der Teil-Heizelemente können deren spezifischen Widerstände eingestellt werden. Bei Vorsehen einer Mischlitze kann somit die Auslegung des spezifischen Widerstandes des Teil-Heizelementes an dem Leitungsverbinder an dem ersten Ende der konfektionierten beheizbaren Medienleitung und des spezifischen Widerstandes des Teil-Heizelementes an dem Leitungsverbinder an dem zweiten Ende der konfektionierten beheizbaren Medienleitung entsprechend den jeweiligen Anforderungen des Anwendungsfalles unterschiedlich erfolgen durch entsprechend geeignete Materialwahl für die Einzeldrähte der Mischlitze.

Die Mischlitze besteht aus einer Anzahl von um ein zugfestes Stützelement oder eine zugfeste Seele verseilten Einzeldrähten, von denen zumindest ein Einzeldraht aus einer Kupfer-Nickel-Legierung und zumindest einer der weiteren Einzeldrähte aus Kupfer oder einer Nickel-Chrom-Legierung besteht. Ferner kann zumindest eines der verseilten Einzeldrähte des zumindest einen Teil-Heizelementes aus einer Kupfer-Zink-Legierung oder einer Kupfer-Zinn-Legierung bestehen. Diese Materialien erweisen sich als besonders vorteilhaft im Hinblick auf das selektive Einstellen des spezifischen Widerstandes des Teil-Heizelementes bzw. der Mischlitze.

Beispielsweise können als Materialien für zumindest einen der Einzeldrähte der Mischlitze bzw. des zumindest einen Teil-Heizelements eine oder mehrere der folgenden Materialien verwendet werden: Cu mit einem spezifischen Widerstand von 0,0178 Ωmm²/m, CuNi1 mit einem spezifischen Widerstand von 0,025 Ωmm²/m, CuNi2 mit einem spezifischen Widerstand von 0,050 Ωmm²/m, CuNi6 mit einem spezifischen Widerstand von 0,100 Ωmm²/m, CuNi10 mit einem spezifischen Widerstand von 0,150 Ωmm²/m, CuNi15 mit einem spezifischen Widerstand von 0,210 Ωmm²/m, CuNi23Mn mit einem spezifischen Widerstand von 0,300 Ωmm²/m, CuNi30Mn mit einem spezifischen Widerstand von 0,400 Omm²/m und CuNi44 mit einem spezifischen Widerstand von 0,490 Ωmm²/m, wobei die spezifischen Widerstände jeweils bei einer Temperatur von 20 °C bestimmt sind. Ferner kann als Nickel-Chrom-Legierung NiCr3020 mit einem spezifischen Widerstand von 1,040 Omm²/m (bei 20 °C) verwendet werden. Die spezifischen Widerstände der miteinander verseilten Einzeldrähte können sich um 0,008 bis 0,74 Omm²/m (bei 20 °C) voneinander unterscheiden.

Das zugfeste Stützelement kann aus einem Kunststoffmaterial, insbesondere einem Kunststoffprofil bestehen. Als Kunststoffmaterialien eignen sich beispielsweise Kevlar^{®} oder Vectran^{®}. Insbesondere kann der Außendurchmesser des zugfesten Stützelements dem eines der (elektrischen) Einzeldrähte der Mischlitze entsprechen, die um das zugfeste Stützelement herum verseilt sind. Als zugfestes Stützelement kann jedoch auch einer der Einzeldrähte dienen, so dass das Material des zugfesten Stützelements dann dem eines der Einzeldrähte entspricht, insbesondere ein Metall oder eine Metalllegierung ist.

Durch Verwenden einer solchen Mischlitze als Teil-Heizelement ist es ferner möglich, die gleichen Teil-Heizelemente auf dem Leitungsverbinder und der Medienleitung, die endseitig mit dem Leitungsverbinder verbunden ist, zu verwenden, so dass eine Unterbrechung im Übergangsbereich zwischen Leitung und Leitungsverbinder vermieden werden kann und Kosten für das Heizelement so gering wie möglich gehalten werden können, die ansonsten durch Vorsehen einer größeren Anzahl von Teil-Heizelementen ansteigen. Vorteilhaft sind daher lediglich zwei oder drei Teil-Heizelemente vorgesehen, die durch Reihenschaltung zu dem konfektionierten Heizelement verbunden sind.

Die zumindest eine rohr- und/oder schlauchförmige Medienleitung und der zumindest eine Leitungsverbinder können weiter vorteilhaft mit dem zumindest eines Heizelements adaptiv umwickelt sein. Dies bedeutet, dass eine Außenbewicklung der rohr- und/oder schlauchförmigen Medienleitung und des zumindest einen endseitig an dieser angeordneten Leitungsverbinders vorgesehen ist, wobei auch der Übergangsbereich zwischen Medienleitung und Leitungsverbinder unterbrechungsfrei bewickelt ist und ein oder zwei Teil-Heizelemente in diesem Übergangsbereich zwischen Medienleitung und Leitungsverbinder übergangs- bzw. unterbrechungsfrei angeordnet sind, somit im Übergangsbereich zwischen Medienleitung und Leitungsverbinder keine Crimpstelle oder anderweitige Verbindungsstelle zwischen den Teil-Heizelementen vorgesehen ist.

Weiter vorteilhaft umfasst das Heizelement zwei oder drei Teil-Heizelemente. Dementsprechend sind vorteilhaft lediglich wenige Verbindungs- bzw. Crimpstellen entlang dem Heizelement vorgesehen. Die jeweiligen Enden der Teil-Heizelemente können kurzgeschlossen oder mit elektrischen Zuleitern verbunden sein, um das aus den Teil-Heizelementen durch Reihenschaltung zusammengesetzte Heizelement an eine elektrische Energiequelle anschließen zu können.

Vorteilhaft weisen zwei miteinander verbundene Teil-Heizelemente die gleichen oder ähnliche Außendurchmesser bzw. Querschnittsflächen auf, insbesondere Litzenaußendurchmesser mit einer Toleranz von +/-0,05 mm. Durch die Verwendung einer Mischlitze ist es möglich, die gleichen bzw. im Wesentlichen die gleichen Querschnittsflächen vorzusehen. Hierdurch ist es möglich, zwei Teil-Heizelemente besonders gut miteinander verbinden zu können, insbesondere durch Crimpen. Die Einzeldrähte selbst können beispielsweise einen Außendurchmesser von 0,19 mm bei Vorsehen von sechs oder sieben verseilten Einzeldrähten oder 0,115 mm bei 19 verseilten Einzeldrähten oder 0,082 mm bei 37 miteinander verseilten Einzeldrähten aufweisen.

Da das zumindest eine Teil-Heizelement in die Rippenstruktur auf der Außenseite des Leitungsverbinders eingelegt wird, um eine Beheizung von durch diesen hindurchströmendem Medium vorsehen zu können, bestimmen auch bereits die Abmessungen der Abstände zwischen den Rippen bzw. der Nuten zwischen den Rippen, in die das zumindest eine Teil-Heizelement eingelegt wird, den Maximal-Außendurchmesser des Teil-Heizelements. Die Auslegung des optimalen Außendurchmessers des Teil-Heizelements bestimmt sich somit nach einer guten Wärmeeinkopplung in das Material des Leitungsverbinders und einer geringen Streubreite der Querschnittsfläche des Teil-Heizelements. Eine bessere Beheizung ist dabei zumeist durch Verwenden eines Teil-Heizelements mit einem geringeren Außendurchmesser möglich. Beispielsweise können daher zwei miteinander verbundene Teil-Heizelemente jeweils eine minimale Querschnittsfläche von 0,15 mm² aufweisen, insbesondere bei Vorsehen einer Litze aus sieben Einzeldrähten für das jeweilige Teil-Heizelement. Hier ist eine kostengünstige Lösung mit ausreichend hoher Zugfestigkeit gegeben, um ein unerwünschtes Beschädigen durch z.B. Brechen oder Reißen des Teil-Heizelementes insbesondere beim Umwickeln der Medienleitung und des zumindest einen Leitungsverbinders, der mit dieser verbunden ist, zu vermeiden. Ferner ist bei Vorsehen einer Querschnittsfläche des Teil-Heizelements von zumindest 0,15 mm² auch eine gute Crimpqualität möglich. Ein optimaler Bereich der Querschnittsfläche eines solchen Teil-Heizelementes liegt bei 0,15 bis 0,37 mm², insbesondere 0,17 bis 0,23 mm². Besonders bevorzugt kann die Querschnittsfläche des Teil-Heizelementes 0,20 mm² betragen, da in diesem Bereich eine besonders gute Zugfestigkeit und Verwendbarkeit des Teil-Heizelementes und ein guter Kompromiss aus Montagefreundlichkeit und geringem Materialeinsatz gegeben ist. Es hat sich gezeigt, dass Teil-Heizelemente mit einer Querschnittsfläche von mehr als 0,30 mm², wie z.B. 0,37 mm², aufgrund der erhöhten Materialkosten, jedoch auch aufgrund der großen Abmessungen sich als nicht mehr so vorteilhaft verwendbar erweist. Die Querschnittsfläche von insbesondere 0,2 mm² bedeutet die Querschnittsfläche der metallischen Einzeldrähte, also abzüglich deren Isolationsummantelung. Ein Einzeldraht kann beispielsweise eine Querschnittsfläche von 0,015 mm² aufweisen.

Die Mischlitze sind aus 7, 19 oder 37 Einzeldrähten gebildet. Die Einzeldrähte weisen den gleichen Drahtdurchmesser auf. Als besonders vorteilhaft erweist es sich, wenn das zumindest eine als Mischlitze ausgebildete Teil-Heizelement sieben verseilte Einzeldrähte umfasst. Die sich hieraus ergebende Schlaglänge beim Verseilen der Einzeldrähte zu dem zumindest einen Teil-Heizelement beträgt dabei vorteilhaft 6 bis 15 mm, insbesondere 9 mm. Die Schlaglänge hat hierbei einen Einfluss auf den sich ergebenden Widerstand, wobei der Einfluss bei etwa 3% liegt. Außenseitig weist das zumindest eine Teil-Heizelement vorteilhaft einen Schutzmantel auf, der insbesondere aus einem Kunststoffmaterial besteht. Dieser kann eine Mindestwandstärke von 0,2 mm aufweisen.

Die rohr- und/oder schlauchförmige Medienleitung und der zumindest eine Leitungsverbinder können formschlüssig und/oder kraftschlüssig oder stoffschlüssig miteinander verbunden sein. Außenseitig kann die konfektionierte beheizbare Medienleitung von zumindest einer isolierenden Schutzhülle umgeben sein, insbesondere sich um die rohr- und/oder schlauchförmige Medienleitung herum ein Hüllrohr, wie ein Wellrohr, erstrecken und der oder die Leitungsverbinder von zumindest einer Schutzkappe umgeben sein. Die isolierende Wirkung wird dabei durch die zwischen Schutzhülle und der Außenseite der Medienleitung bzw. dem zumindest einen Leitungsverbinder eingeschlossene Luft erzielt.

Eine besonders gute Fixierung des zumindest einen konfektionierten Heizelements auf der rohr- und/oder schlauchförmigen Medienleitung zum Ausbilden einer besonders guten Beheizung der Medienleitung kann dadurch erfolgen, dass die zumindest eine rohr- und/oder schlauchförmige Medienleitung mit dem zumindest einen konfektionierten Heizelement versehen und das zumindest eine konfektionierte Heizelement durch zumindest partielles Umwickeln der mit diesem versehenen Medienleitung mit zumindest einem Folienelement auf dieser fixiert wird und die mit dem zumindest einen konfektionierten Heizelement und dem zumindest einen Folienelement versehene Medienleitung erwärmt wird zum besseren Einbetten des konfektionierten Heizelements in dem Folienelement und besseren Anlegen von diesem an der Außenseite der Medienleitung. Durch das Erwärmen der mit dem zumindest einen konfektionierten Heizelement und dem zumindest einen Folienelement versehenen Medienleitung kann nicht nur diese besser anwendungsspezifisch in Form gebracht, insbesondere gebogen, werden. Durch die aufgebrachte Wärme kann das zumindest eine Folienelement entspannt und geschrumpft werden, was zu einem besseren Einbetten des zumindest einen Heizelements in dem Folienelement und zu einer besseren Anlage von diesem auf der Außenseite der Medienleitung zwischen den Windungen des zumindest einen Heizelements führt. Vorteilhaft kann ein unter Hitze schrumpfendes Folienelement verwendet werden. Hierdurch lässt sich eine besonders gute Fixierung des zumindest einen Heizelements auf der Medienleitung und Anlage des Heizelements auf dieser und somit eine sehr gute Wärmeübertragung von dem Heizelement auf die Wandung der Medienleitung und somit eine besonders gute Erwärmung des durch die Medienleitung strömenden Mediums erreichen. Ein Aufbringen des zumindest einen Folienelements kann auch nur partiell erfolgen. Auch bei einem solchen partiellen Aufbringen des Folienelements auf der rohr- und/oder schlauchförmigen Medienleitung, insbesondere durch partielles Umwickeln von dieser, kann ebenso das zumindest eine Heizelement auf dieser gut fixiert werden, so dass ein sehr guter Wärmeeintrag in die Wandung der Medienleitung erzielt werden kann.

Durch Kombination des Vorsehens einer Mischlitze und einer zumindest partiellen Bewicklung der mit dem zumindest einen Heizelement versehenen Medienleitung mit zumindest einem Folienelement, wie einem PET-Folienelement, also einem Folienelement aus Polyethylen, sind synergetische Effekte möglich. Bei Verwenden eines transparenten Folienmaterials für das zumindest eine Folienelement ist es bei unterschiedlicher Farbgebung der Heizelemente möglich, diese durch das Folienelement hindurch zu erkennen, so dass eine optische Erkennung unterschiedlicher Widerstände der Heizelemente von außen durch das Folienelement hindurch möglich ist.

Mischlitzen ermöglichen eine Materialeinsparung aufgrund eines vergleichsweise besonders geringen Querschnitts bzw. einer vergleichsweise besonders geringen Querschnittsfläche. Dies verbessert zugleich auch den Kontakt des Folienelements auf dem zumindest einen Heizelement und der rohr- und/oder schlauchförmigen Medienleitung, also die Befestigung des Fölienelements auf Heizelement und Medienleitung. Dies kann durch eine Verstreckbarkeit und das Überdehnen bzw. plastische Verformen des Folienelements noch gesteigert werden. Das zumindest eine Folienelement wird also beim Bewickeln der Medienleitung mit dem darauf angeordneten zumindest einen Heizelement vorteilhaft verstreckt und/oder überdehnt und/oder plastisch verformt.

Die Bewicklung einer rohr- und/oder schlauchförmigen Medienleitung mit Mischlitzen und mit zumindest einem Folienelement sorgt insgesamt für einen vergleichsweise geringen Durchmesser der bewickelten Medienleitung. Eine Ummantelung durch eine Schutzhülle, wie ein Wellrohr und einen Luftspalt zwischen Wellrohr und Medienleitung, oder einen Isolationsschaum, wie beispielsweise Santoprene^{®}, kann dadurch mit entsprechend geringem Materialeinsatz erfolgen, also z.B. ein kleiner Innendurchmesser der Schutzhülle vorgesehen werden. Dies führt zu einer kostengünstigen Lösung und zugleich zu einer vielseitigen Einsetzbarkeit, da der Platzbedarf der dementsprechend ausgebildeten konfektionierten Medienleitung vergleichsweise gering ist.

Das Konfektionieren einer Medienleitung erfolgt somit dadurch, dass zunächst die rohr- und/oder schlauchförmige Medienleitung insbesondere kontinuierlich mit zumindest einem Heizelement bewickelt, nachfolgend mit zumindest einem Klebe-, Gewebeklebe- oder Gewebeband und/oder zumindest einem Folienelement bewickelt wird. Um die entsprechend vorkonfektionierte Medienleitung endseitig mit zumindest einem Leitungsverbinder versehen zu können, werden Tape bzw. Folienelement und Heizelement(e) endseitig rückgewickelt. Sodann kann ein Konfektionieren mit dem zumindest einen Leitungsverbinder erfolgen, wobei der zumindest eine Leitungsverbinder endseitig mit der Medienleitung verbunden wird, z.B. durch Laserschweißen. Wird anstelle eines Folienelements ein übliches Klebeband (Tape), Gewebeband, Gewebeklebeband oder dergleichen mit einem Klebstoff versehenes Bandmaterial zum Bewickeln der mit dem zumindest einen Heizelement versehenen Medienleitung verwendet, wobei der Klebstoff zum Haften des Tapes bzw. Klebe-, Gewebe- oder Gewebeklebebandes auf der Medienleitung und beim überlappenden Bewickeln auf dem Band selbst dazu führt, dass nach dem Rückwickeln des Bandes Klebstoff-Rückstände auf der Medienleitung verbleiben. Diese müssen aufwendig wieder entfernt werden, bevor die Enden der Medienleitung mit den Leitungsverbindern verbunden, insbesondere verschweißt werden können. Die vorstehend beschriebene Verwendung des zumindest einen Folienelements zum Fixieren des zumindest einen Heizelements auf der Medienleitung erweist sich daher als besonders vorteilhaft, da dieser Nachteil von Klebstoff-Rückständen nicht mehr auftritt.

Zur näheren Erläuterung der Erfindung werden im Folgenden Ausführungsbeispiele von dieser näher anhand der Zeichnungen beschrieben. Diese zeigen in:
- Figur 1: eine Prinzipskizze einer ersten Ausführungsform einer erfindungsgemäßen konfektionierten beheizbaren Medienleitung mit zwei endseitig an einer rohrförmigen Medienleitung angebrachten Leitungsverbindern und zwei miteinander zu einem konfektionierten Heizelemente in Reihe verbundenen Teil-Heizelementen,
- Figur 2: eine Prinzipskizze einer zweiten Ausführungsform einer erfindungsgemäßen konfektionierten beheizbaren Medienleitung mit zwei endseitig an einer rohrförmigen Medienleitung angebrachten Leitungsverbindern und zwei Teil-Heizelementen,
- Figur 3: eine Prinzipskizze einer dritten Ausführungsform einer erfindungsgemäßen konfektionierten beheizbaren Medienleitung mit zwei endseitig an einer rohrförmigen Medienleitung angebrachten Leitungsverbindern und zwei Teil-Heizelementen, als Abwandlung zu der Ausführungsform nach Figur 1,
- Figur 4: eine Prinzipskizze einer vierten Ausführungsform einer erfindungsgemäßen konfektionierten beheizbaren Medienleitung mit zwei endseitig an einer rohrförmigen Medienleitung angebrachten Leitungsverbindern und zwei miteinander zu einem konfektionierten Heizelemente in Reihe verbundenen Teil-Heizelementen,
- Figur 5: eine Prinzipskizze einer fünften Ausführungsform einer erfindungsgemäßen konfektionierten beheizbaren Medienleitung mit zwei endseitig an einer rohrförmigen Medienleitung angebrachten Leitungsverbindern und vier Teil-Heizelementen, wobei sich zwei der Teil-Heizelemente entlang der rohrförmigen Medienleitung und jeweils ein Teil-Heizelement auf jedem der Leitungsverbinder erstreckt,
- Figur 6: eine Prinzipskizze einer sechsten Ausführungsform einer erfindungsgemäßen konfektionierten beheizbaren Medienleitung mit zwei endseitig an einer rohrförmigen Medienleitung angebrachten Leitungsverbindern und drei Teil-Heizelementen, von denen sich eines lediglich auf dem einen Leitungsverbinder erstreckt, eines sich im Wesentlichen entlang der rohrförmigen Medienleitung erstreckt und das dritte sich entlang der rohrförmigen Medienleitung und entlang dem zweiten Leitungsverbinder erstreckt,
- Figur 7: eine Querschnittsansicht durch eine erfindungsgemäße Medienleitung mit einem darauf angeordneten konfektionierten Heizelement mit einem vergleichsweise geringen Außendurchmesser,
- Figur 8: eine Querschnittsansicht durch eine erfindungsgemäße Medienleitung mit einem darauf angeordneten konfektionierten Heizelement mit einem vergleichsweise größeren Außendurchmesser,
- Figur 9: eine Querschnittsansicht durch einen erfindungsgemäßen Leitungsverbinder mit zwischen dessen außenseitigen Rippen angeordnetem konfektionierten Heizelement,
- Figur 10: eine Prinzipskizze einer siebten Ausführungsform einer erfindungsgemäßen konfektionierten beheizbaren Medienleitung mit zwei endseitig an einer rohrförmigen Medienleitung angebrachten Leitungsverbindern und zwei Teil-Heizelementen, als Abwandlung zu der Ausführungsform nach Figur 4,
- Figur 11: eine Prinzipskizze einer achten Ausführungsform einer erfindungsgemäßen konfektionierten beheizbaren Medienleitung mit zwei endseitig an einer rohrförmigen Medienleitung angebrachten Leitungsverbindern und vier Teil-Heizelemente, wobei sich zwei der Teil-Heizelemente entlang der rohrförmigen Medienleitung erstrecken und miteinander verbunden sind und sich ein Teil-Heizelement auf jedem der Leitungsverbinder erstreckt,
- Figur 12: eine Prinzipskizze einer neunten Ausführungsform einer erfindungsgemäßen konfektionierten beheizbaren Medienleitung mit zwei endseitig an einer rohrförmigen Medienleitung angebrachten Leitungsverbindern und zwei Teil-Heizelementen, wobei sich das eine Teil-Heizelement entlang der rohrförmigen Medienleitung eines Teilbereichs des einen Leitungsverbinders und das andere Teil-Heizelement auf dem anderen Leitungsverbinder erstreckt,
- Figur 13: eine Seitendetailansicht von sieben verseilten Einzeldrähten eines erfindungsgemäßen als Mischlitze ausgebildeten Teil-Heizelements,
- Figur 14: eine Querschnittsansicht durch das erfindungsgemäße, als Mischlitze ausgebildete Teil-Heizelement gemäß Figur 13, umfassend sieben miteinander um ein zugfestes Stützelement verseilte Einzeldrähte,
- Figur 15: eine Prinzipskizze einer rohr- oder schlauchförmigen Medienleitung mit zwei um diese herum gewickelt angeordneten Heizelementen, und
- Figur 16: eine Prinzipskizze der mit den beiden Heizelementen versehenen Medienleitung gemäß Figur 15, wobei zur Fixierung der Heizelemente auf der Medienleitung diese mit einem Folienelement teilweise umwickelt ist.

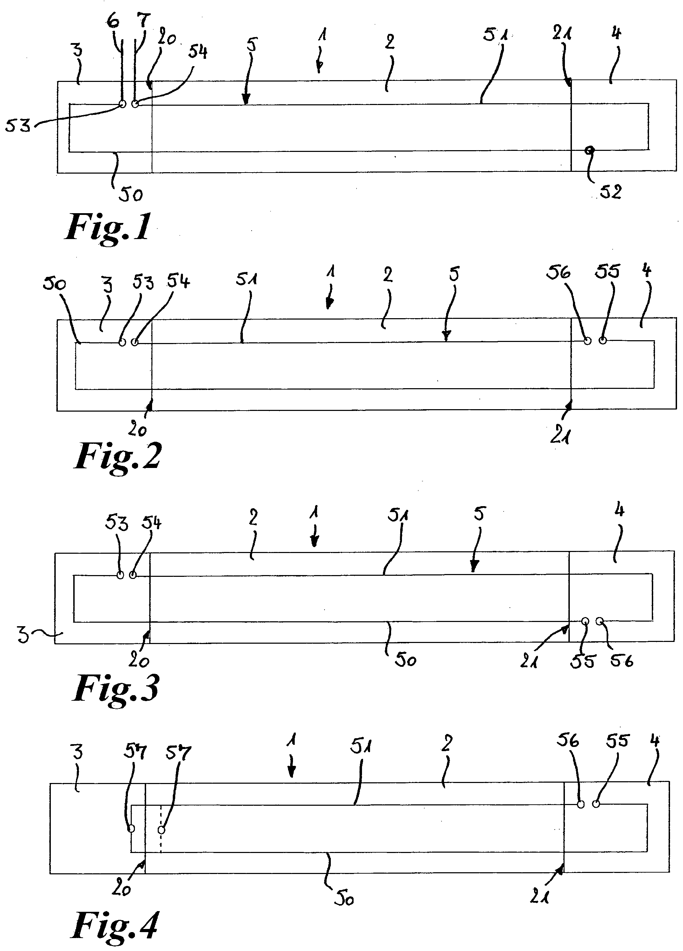

Figur 1 zeigt eine konfektionierte beheizbare Medienleitung 1 mit einer rohrförmigen Medienleitung 2 und zwei endseitig an dieser angebrachten Leitungsverbindern 3, 4. Die Verbindung der rohrförmigen Medienleitung 2 und der beiden Leitungsverbinder 3, 4 kann form- und/oder kraftschlüssig oder auch stoffschlüssig erfolgen. Anstelle einer rohrförmigen Medienleitung 2 kann auch eine schlauchförmige Medienleitung vorgesehen werden. Ebenfalls ist es möglich, dass die Medienleitung rohr- und/oder schlauchförmig ist, mit zumindest einem rohrförmigen Abschnitt und zumindest einem schlauchförmigen Abschnitt.

Entlang der Medienleitung 1 erstreckt sich ein konfektioniertes Heizelement 5, das nach Figur 1 aus zwei an einer Verbindungsstelle 52, insbesondere Crimpstelle, miteinander verbundenen, miteinander in Reihe geschalteten Teil-Heizelementen 50, 51 gebildet ist. Das Teil-Heizelement 50 erstreckt sich entlang der rohrförmigen Medienleitung 2, auf dem ersten Leitungsverbinder 3 und im Übergangsbereich 21 von der rohrförmigen Medienleitung 2 zu dem zweiten Leitungsverbinder 4. Das zweite Teil-Heizelement 51 erstreckt sich ebenfalls entlang der rohrförmigen Medienleitung 2, ferner auf dem zweiten Leitungsverbinder 4 und in dem Übergangsbereich 20 zwischen der rohrförmigen Medienleitung 2 und dem ersten Leitungsverbinder 3. Die Verbindungsstelle 52 ist auf dem zweiten Leitungsverbinder 4 angeordnet, so dass sich das Teil-Heizelement 50 bis zu dieser erstreckt. Auf dem ersten Leitungsverbinder 3 sind die beiden Enden 53, 54 der beiden Teil-Heizelemente 50, 51 mit elektrischen Zuleitern 6, 7 verbunden, insbesondere durch Crimpen, über die ein Anschluss an eine elektrische Strom- bzw. Spannungsversorgung erfolgen kann, um ein Beheizen zu ermöglichen. In den beiden Übergangsbereichen 20, 21 zwischen der rohrförmigen Medienleitung 2 und den beiden Leitungsverbindern 3, 4 ist somit keine Verbindungsstelle vorgesehen, so dass so wenige Teil-Heizelemente wie möglich vorgesehen werden können, was die Kosten der konfektionierten beheizbaren Medienleitung gegenüber den Lösungen des Standes der Technik senkt.

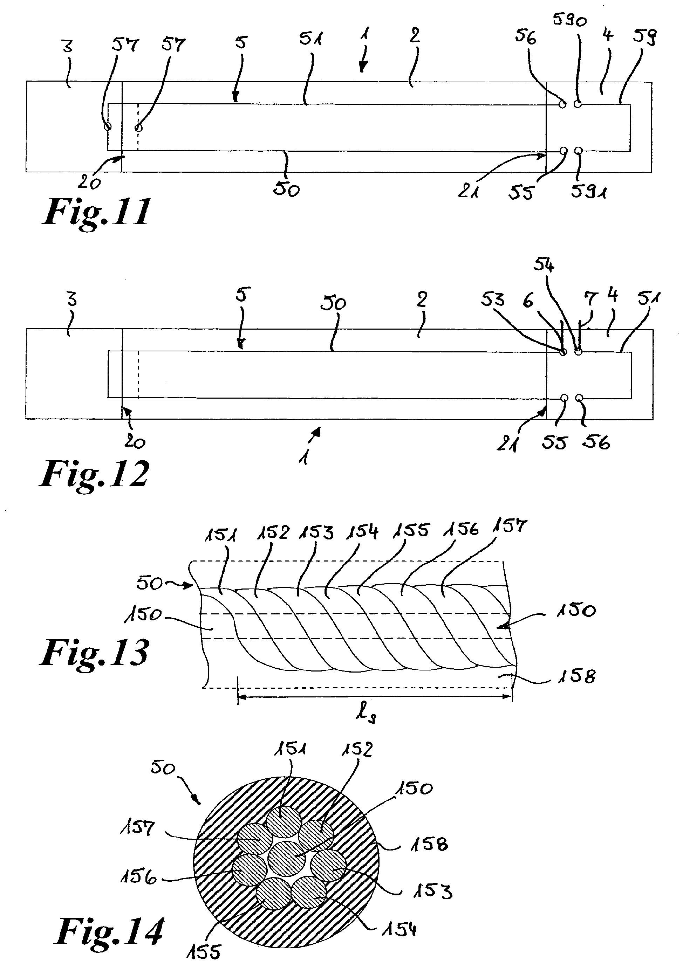

Die beiden Teil-Heizelemente 50, 51 sind jeweils als Mischlitze ausgebildet. Dies bedeutet, dass sie aus einer Anzahl von verseilten Einzeldrähten gebildet sind, die aus zumindest zwei unterschiedlichen Materialien mit unterschiedlichen spezifischen Widerständen bestehen. Ein Beispiel für eine solche Mischlitze in Form des Teil-Heizelements 50 ist in Figur 14 im Querschnitt und in Figur 13 in einem Ausschnitt gezeigt. In diesem Beispiel sind sieben Einzeldrähte 151, 152, 153, 154, 155, 156 und 157 um ein zugfestes Stützelement bzw. eine zugfeste Seele 150 herum verseilt. Die Schlaglänge Iₛ der verseilten Einzeldrähte kann beispielsweise 6 bis 15 mm betragen, insbesondere 9 mm (siehe Figur 13). Der Verseilverband der Einzeldrähte ist üblicherweise außenseitig von einem Schutzmantel 158 umgeben, wie er in den Figuren 13 und 14 angedeutet ist. Dieser besteht insbesondere aus einem Kunststoffmaterial. Durch das Vorsehen einer solchen Mischlitze für die Teil-Heizelemente 50, 51 können diese an die jeweiligen Umgebungstemperaturbedingungen optimal angepasst werden. Wird beispielsweise der Bereich der konfektionierten beheizbaren Medienleitung 1, an dem der erste Leitungsverbinder 3 angeordnet ist, in einem Heißbereich in einem Fahrzeug angeordnet, also abgasstrangnah oder motornah, ist lediglich eine geringe Heizleistung erforderlich. Ist demgegenüber der gegenüberliegende, den zweiten Leitungsverbinder 4 umfassende Bereich der konfektionierten beheizbaren Medienleitung 1 in einem Kaltbereich eines Fahrzeugs angeordnet, wie. im Bereich eines Fahrzeugtanks, wird hier eine höhere Heizleistung benötigt. Dies kann durch entsprechende Wahl der Materialien der Einzeldrähte 151 bis 157 der Teil-Heizelemente 50, 51 über deren spezifischen Gesamtwiderstand eingestellt werden, da R = (ρ·I)/A gilt, wobei R für den Widerstand, ρ für den spezifischen Widerstand, I für die Länge des Teil-Heizelements und A für dessen Querschnittsfläche steht. Dementsprechend kann in dem Heißbereich ein Überhitzen und in dem Kaltbereich ein mangelndes oder nicht stattfindendes Auftauen vermieden werden.

In Figur 2 ist eine andere Anordnung der beiden Teil-Heizelemente 50, 51 entlang der rohrförmigen Medienleitung 2 und auf den beiden Leitungsverbindern 3, 4 gezeigt. Dort erstreckt sich das Teil-Heizelement 50 entlang der rohrförmigen Medienleitung 2 und auf dem ersten Leitungsverbinder 3 und dem zweiten Leitungsverbinder 4. Das Teil-Heizelement 51 erstreckt sich lediglich entlang der rohrförmigen Medienleitung 2 und über die Übergangsbereiche 20, 21 hinweg auf den ersten Leitungsverbinder 3 und den zweiten Leitungsverbinder 4. Auf beiden Leitungsverbindern 3, 4 sind die Enden 53, 54 und 55, 56 der beiden Teil-Heizelemente 50, 51 angeordnet. An den Enden 53, 54 bzw. 55, 56 können dementsprechend elektrische Zuleiter 6, 7 angeschlossen oder die Enden 53, 54 bzw. 55, 56 können kurzgeschlossen werden. Dies kann in Abhängigkeit vom jeweiligen Anwendungsfall geeignet ausgewählt werden.

Die Ausführungsform der konfektionierten beheizbaren Medienleitung 1 nach Figur 3 unterscheidet sich von der nach Figur 1 dadurch, dass die Enden 55, 56 der beiden Teil-Heizelemente 50, 51 nicht an der Verbindungsstelle 52 miteinander vercrimpt sind, sondern frei sind, so dass diese miteinander verbunden und dadurch kurgeschlossen werden können oder an diesen elektrische Zuleiter 6, 7 angeschlossen werden können.

Bei der Ausführungsvariante nach Figur 4 sind, im Unterschied zu der Ausgestaltung der konfektionierten beheizbaren Medienleitung 1 nach Figur 2, die beiden Enden 53, 54 der beiden Teil-Heizelemente 50, 51 an einer Verbindungsstelle 57, wie einer Crimpstelle, fest miteinander verbunden. Diese ist auf dem ersten Leitungsverbinder 3 angeordnet oder kann auf der rohrförmigen Medienleitung 2 angeordnet sein, wie durch die gestrichelte Linie angedeutet. Dementsprechend erstreckt sich das Teil-Heizelement 50 nicht (gestrichelte Linie) oder lediglich über den Übergangsbereich 20 hinweg und in einem sehr kurzen Abschnitt auf dem ersten Leitungsverbinder 3, so dass der erste Leitungsverbinder 3 kaum beheizt wird und somit in einem Heißbereich eines Fahrzeugs, also in einem Bereich mit hoher zu erwartender Umgebungstemperatur, angeordnet wird.

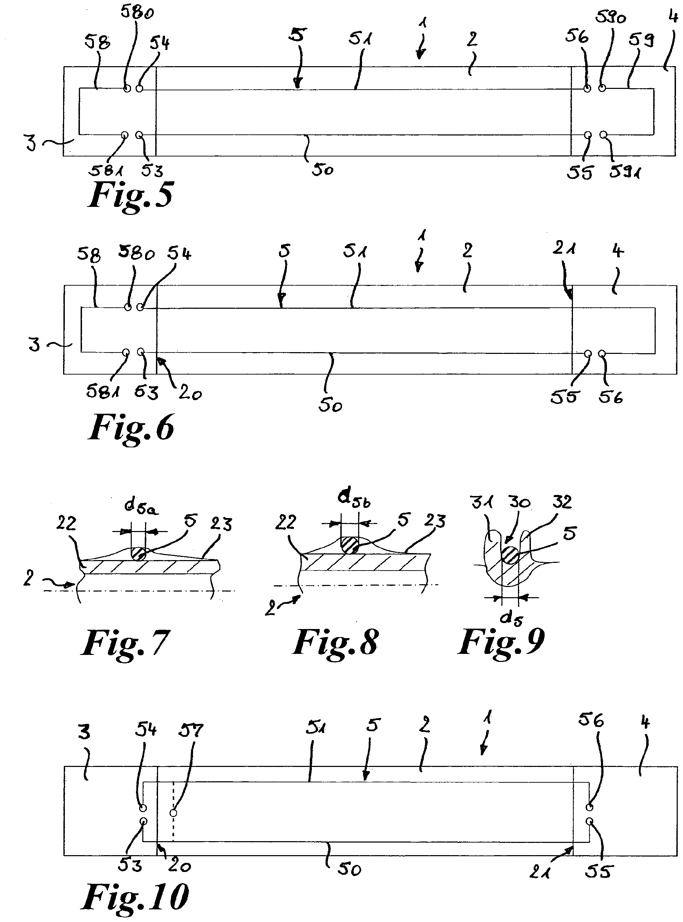

Bei der Ausführungsvariante der konfektionierten beheizbaren Medienleitung 1 nach Figur 5 sind vier Teil-Heizelemente 50, 51, 58, 59 vorgesehen, wobei die beiden Teil-Heizelemente 50, 51 entlang der rohrförmigen Medienleitung 2 und in den beiden Übergangsbereichen 20, 21, das Teil-Heizelement 58 auf dem ersten Leitungsverbinder 3 und das Teil-Heizelement 59 auf dem zweiten Leitungsverbinder 4 angeordnet sind. Die Enden 53, 54, 55, 56 der Teil-Heizelemente 50, 51 können mit den Enden 580, 581, 590, 591 der Teil-Heizelemente 58, 59 kurzgeschlossen, also verbunden sein oder mit elektrischen Zuleitern 6, 7 zum Anschließen an eine elektrische Strom- bzw. Spannungsversorgung (nicht gezeigt).

In Figur 6 ist eine weitere Ausführungsvariante der konfektionierten beheizbaren Medienleitung 1 gezeigt, bei der drei Teil-Heizelemente 50, 51, 58 vorgesehen sind. Das Teil-Heizelement 51 erstreckt sich, wie in Figur 3, entlang der rohrförmigen Medienleitung 2, über den Übergangsbereich 20 hinweg bis auf den ersten Leitungsverbinder 3 und an seinem anderen Ende über den zweiten Leitungsverbinder 4 hinweg. Auf diesem ist es mit dem Teil-Heizelement 50 verbindbar oder mit elektrischen Zuleitern 6, 7, wie Figur 3 oben ausgeführt. Das Teil-Heizelement 50 erstreckt sich entlang der rohrförmigen Medienleitung 2 und über die beiden Übergangsbereiche 20, 21 hinweg. Das dritte Teil-Heizelement 58 ist auf dem ersten Leitungsverbinder 3 angeordnet. An seinen Enden 580 581 kann es mit dem beiden anderen Teil-Heizelementen 50, 51 an deren Enden 53, 54 kurzgeschlossen oder die Enden 580, 581, 53, 54 mit elektrischen Zuleitern 6, 7 verbunden werden.

Die in Figur 10 gezeigte Ausführungsvariante der konfektionierten beheizbaren Medienleitung 1 ist eine Variante zu der in Figur 4 gezeigten Ausführungsform. Im Unterschied zu dieser erstreckt sich allerdings das Teil-Heizelement 50 nicht auf dem zweiten Leitungsverbinder 4. Vielmehr werden beide Leitungsverbinder 3, 4 im Wesentlichen nicht beheizt, da die beiden Teil-Heizelemente 50, 51 sich zwar über die Übergangsbereiche 20, 21 hinweg, jedoch lediglich in einem kurzen Abschnitt auf den beiden Leitungsverbindern 3, 4 erstrecken. Ihre Enden 53, 54 und 55, 56 können wiederum kurzgeschlossen oder mit elektrischen Zuleitern 6, 7 verbunden werden, um ein Anschließen an eine elektrische Strom- bzw. Spannungsversorgung (nicht gezeigt) zu ermöglichen. Gestrichelt ist in Figur 10 die in Figur 4 ebenfalls gezeigte Variante gezeigt, bei der die beiden Teil-Heizelemente 50, 51 miteinander an der auf der rohrförmigen Medienleitung 2 liegenden Verbindungsstelle 57 fest verbunden sind, somit der erste Leitungsverbinder 3 nicht beheizt wird. Die in Figur 10 gezeigten Varianten können insbesondere bei Anordnen der gesamten konfektionierten beheizbaren Medienleitung 1 in einem Heißbereich vorgesehen werden, in dem kein Beheizen der Leitungsverbinder 3, 4 erforderlich ist.

Die in Figur 11 gezeigte Ausführungsvariante der konfektionierten beheizbaren Medienleitung 1 umfasst drei Teil-Heizelemente 50, 51, 59, wobei das Teil-Heizelement 59 auf dem zweiten Leitungsverbinder 4 angeordnet ist, während sich die beiden Teil-Heizelemente 50, 51 entlang der rohrförmigen Medienleitung 2 und über die beiden Übergangsbereiche 20, 21 hinweg erstrecken. Wie bei der Ausführungsform nach Figur 4 sind die beiden Teil-Heizelemente 50, 51 auf dem ersten Leitungsverbinder 3 oder auf der rohrförmigen Medienleitung 2 miteinander an der Verbindungs- bzw. Crimpstelle 57 fest verbunden. Die Enden 56 und 590 bzw. 55 und 591 der jeweiligen Teil-Heizelemente 51, 59 und 50, 59 können wiederum kurzgeschlossen oder mit elektrischen Zuleitern 6, 7 zum Anschluss an eine elektrische Strom- oder Spannungsversorgung (nicht gezeigt) verbunden sein oder werden.

Bei der in Figur 12 gezeigten Ausführungsvariante der konfektionierten beheizbaren Medienleitung 1 sind lediglich zwei Teil-Heizelemente 50, 51 vorgesehen, wobei das Teil-Heizelement 50 doppeltgelegt ist und sich von dem zweiten Leitungsverbinder 4 über den Übergangsbereich 21, die rohrförmige Medienleitung 2 und den Übergangsbereich 20 hinweg auf einem kurzen Abschnitt des ersten Leitungsverbinders 3 und von dort zurück über den Übergangsbereich 20, die rohrförmige Medienleitung 2 und den Übergangsbereich 21 hinweg auf den zweiten Leitungsverbinder 4 zurück erstreckt. Das Teil-Heizelement 51 ist lediglich auf dem zweiten Leitungsverbinder 4 angeordnet. An den auf dem zweiten Leitungsverbinder 4 angeordneten Enden 53, 54 und 55, 56 können die Teil-Heizelemente 50, 51 miteinander verbunden bzw. kurzgeschlossen oder wiederum mit elektrischen Zuleitern 6, 7 verbunden sein oder werden, um einen Anschluss an eine elektrische Strom- oder Spannungsversorgung (nicht gezeigt) zu ermöglichen. Gestrichelt ist in Figur 12 eine Variante gezeigt, bei sich das Teil-Heizelement 50 nicht bis in den Übergangsbereich 20 bzw. auf den ersten Leitungsverbinder 3 erstreckt. Der erste Leitungsverbinder 3 und der Übergangsbereich 20 zu diesem bleiben dabei unbeheizt. In beiden Varianten kann der erste Leitungsverbinder 3 wiederum in einem Heißbereich eines Fahrzeugs angeordnet werden, während der zweite Leitungsverbinder 4 beheizt wird und daher in einem Kaltbereich angeordnet werden kann.

Die Figuren 7 und 8 zeigen Längsschnittansichten im Bereich einer Leitungswandung 22 der rohrförmigen Medienleitung 2, wobei außen auf der Leitungswandung 22 jeweils eine Windung des konfektionierten Heizelements 5 bzw. eines Teil-Heizelements von diesem angeordnet und durch ein Fixierband 23, wie ein Gewebe-, Klebe- oder Gewebeklebeband oder Folienelement, befestigt ist. Der Unterschied zwischen den Figuren 7 und 8 besteht lediglich darin, dass die beiden dort gezeigten konfektionierten Heizelemente 5 einen unterschiedlichen Außendurchmesser d₅ aufweisen. Das in Figur 7 gezeigte konfektionierte Heizelement 5 oder Teil-Heizelement weist einen geringeren Außendurchmesser d₅a auf als das in Figur 8 gezeigte konfektionierte Heizelement 5 oder Teil-Heizelement mit einem Außendurchmesser d_{5b}. Eine bessere Wärmeeinkopplung ist mit dem in Figur 7 gezeigten konfektionierten Heizelement 5 mit geringerem Außendurchmesser d₅ₐ und einer geringen Streubreite der Querschnittsfläche des konfektionierten Heizelements 5 bzw. von dessen Teil-Heizelementen möglich. Dies kann auch der Schnittansicht durch eine außenseitige Rippenstruktur z.B. des ersten oder des zweiten Leitungsverbinders 3, 4, die in Figur 9 gezeigt ist, entnommen werden. Das konfektionierte Heizelement 5 bzw. dessen Teil-Heizelement liegt in einer Nut 30 zwischen zwei Rippen 31, 32 des ersten Leitungsverbinders 3. Ein optimaler Außendurchmesser d₅ des konfektionierten Heizelements 5 bzw. eines Teil-Heizelements von diesem führt zu einer optimalen Anlage in der Nut 30 und somit zu einem besonders guten Wärmeübergang.

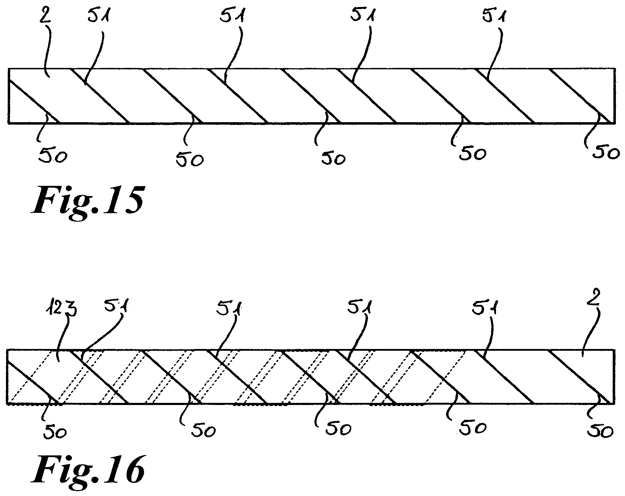

In Figur 15 ist die rohrförmige Medienleitung 2 mit zwei um diese herum gewickelten Teil-Heizelementen 50, 51 gezeigt. Die beiden Teil-Heizelemente 50, 51 wechseln sich dabei miteinander ab, wie der Seitenansicht der Medienleitung 2 in Figur 15 entnommen werden kann. Wie Figur 16 zu entnehmen ist, kann zur Fixierung der beiden Teil-Heizelemente 50, 51 auf der Außenseite der Medienleitung 2 das Fixierband als zumindest ein Folienelement 123 ausgebildet sein. Dieses ist in Figur 16 gestrichelt und einander überlappend gezeigt. In der in Figur 16 gezeigten Ausführungsvariante ist es in entgegengesetzter Richtung zu den beiden Teil-Heizelementen 50, 51 um diese und die Medienleitung 2 herum gewickelt. Für eine Fixierung ist es auch bereits ausreichend, lediglich eine abschnittsweise Bewicklung mit dem zumindest einen Folienelement 123 vorzusehen. Dieses kann auch mit der Wickelrichtung der Teil-Heizelemente 50, 51 mitlaufend orientiert sein. Durch Erwärmen der Medienleitung mit den darauf angeordneten Teil-Heizelementen 50, 51 und dem zumindest einen Folienelement 123 entspannt letzteres und schrumpft, so dass es sich besonders eng auf den beiden Teil-Heizelementen 50, 51 und der Außenseite der Medienleitung 2 anlegt. Hierdurch ist eine besonders gute Fixierung und enge Anlage der-Teil-Heizelemente auf der Medienleitung möglich, so dass eine besonders gute Beheizung der Medienleitung 2 durch die beiden Teil-Heizelemente 50, 51 ermöglicht wird. Beim Bewickeln der Medienleitung 2 mit den Teil-Heizelementen 50, 51 bzw. dem zumindest einen Heizelement 5 wird das zumindest eine Folienelement 123 vorteilhaft verstreckt und/oder überdehnt und/oder plastisch verformt, um eine besonders gute Anlage an der Medienleitung und den Teil-Heizelementen bzw. dem Heizelement vorzusehen.

In den nachfolgenden Tabellen finden sich mögliche Materialien für die verseilten Einzeldrähte der Teil-Heizelemente 50, 51 der konfektionierten Heizelemente 5, die in den in den Figuren 1 bis 6 und 10 bis 12, 15, 16 gezeigten Ausführungsvarianten gezeigt sind. Bei einem Verseilen von sieben Einzeldrähten, die um ein zugfestes Stützelement 150 herum verseilt sind, wie in den Figuren 13 und 14 angedeutet, können für die Einzeldrähte beispielsweise die folgenden, in Tabelle 1 aufgelisteten Materialien verwendet werden. In Tabelle 1 sind in Zeilen untereinander fünf verschiedene Beispiele 1 bis 5 für unterschiedliche, mit den Kombinationen an Einzeldrähten aus den jeweils genannten Materialien erzielbare längenbezogene Widerstände R wiedergegeben. Einer der Einzeldrähte kann dabei das zugfeste Stützelement sein, beispielsweise Draht 7 = zugfestes Stützelement 150.

**Tabelle 1:**

| | | **Draht 1** | **Draht 2** | **Draht 3** | **Draht 4** | **Draht 5** | **Draht 6** | **Draht 7** |
|---|---|---|---|---|---|---|---|---|
| | **R [Ω/m]** | **Material** | **Material** | **Material** | **Material** | **Material** | **Material** | **Material** |
| **1** | 0,097 | Cu | Cu | Cu | Cu | Cu | CuNi1 | CuNi1 |
| **2** | 0,119 | Cu | Cu | Cu | CuNi1 | CuNi1 | CuNi1 | CuNi6 |
| **3** | 0,436 | CuNi2 | CuNi2 | CuNi6 | CuNi6 | CuNi6 | CuNi10 | CuNi10 |
| **4** | 2,658 | CuNi30 Mn | CuNi44 | CuNi44 | CuNi44 | CuNi44 | CuNi44 | NiCr3020 |
| **5** | 4,651 | CuNi44 | NiCr3020 | NiCr3020 | NiCr3020 | NiCr3020 | NiCr3020 | NiCr3020 |

In der nachstehenden Tabelle 2 sind beispielhaft Materialien der Einzeldrähte eines Teil-Heizelements mit wiederum sieben verseilten Einzeldrähten für acht Beispiele 1 bis 8 unterschiedlicher, mit den Kombinationen an Einzeldrähten aus den jeweils genannten Materialien erzielbarer längenbezogener Widerstände R aufgelistet.

**Tabelle 2:**

| | | **Draht 1** | **Draht 2** | **Draht 3** | **Draht 4** | **Draht 5** | **Draht 6** | **Draht 7** |
|---|---|---|---|---|---|---|---|---|
| | **R [Ω/m]** | **Material** | **Material** | **Material** | **Material** | **Material** | **Material** | **Material** |
| **1** | 0,131 | Cu | Cu | Cu | CuNi1 | CuNi2 | CuNi2 | CuNi2 |
| **2** | 0,145 | CuNi1 | CuNi1 | CuNi1 | CuNi1 | CuNi1 | CuNi1 | CuNi6 |
| **3** | 0,177 | CuNi1 | CuNi1 | CuNi1 | CuNi1 | CuNi2 | CuNi2 | CuNi15 |
| **4** | 0,198 | CuNi1 | CuNi1 | CuNi1 | CuNi1 | CuNi6 | CuNi10 | CuNi10 |
| **5** | 0,218 | CuNi1 | CuNi1 | CuNi2 | CuNi2 | CuNi2 | CuNi2 | CuNi10 |
| **6** | 0,242 | CuNi1 | CuNi2 | CuNi2 | CuNi2 | CuNi2 | CuNi2 | CuNi6 |
| **7** | 0,326 | CuNi2 | CuNi2 | CuNi2 | CuNi2 | CuNi2 | CuNi10 | CuNi15 |
| **8** | 0,397 | CuNi2 | CuNi2 | CuNi2 | CuNi6 | CuNi6 | CuNi10 | CuNi15 |

In der nachstehenden Tabelle 3 finden sich mögliche Materialien der Einzeldrähte eines Teil-Heizelements mit neunzehn verseilten Einzeldrähten für fünf Beispiele 1 bis 5 unterschiedlicher, mit den Kombinationen an Einzeldrähten aus den jeweils genannten Materialien erzielbarer längenbezogener Widerstände R.

**Tabelle 3:**

| | | **Beispiel 1** | **Beispiel 2** | **Beispiel 3** | **Beispiel 4** | **Beispiel 5** |
|---|---|---|---|---|---|---|
| **R [Ω/m]** | | 0,131 | 0,145 | 0,162 | 0,177 | 0,198 |
| **Draht 1** | **Material** | Cu | CuNi1 | Cu | CuNi1 | CuNi1 |
| **Draht 2** | **Material** | Cu | CuNi1 | CuNi1 | CuNi1 | CuNi1 |
| **Draht 3** | **Material** | Cu | CuNi1 | CuNi1 | CuNi1 | CuNi1 |
| **Draht 4** | **Material** | Cu | CuNi1 | CuNi1 | CuNi1 | CuNi1 |
| **Draht 5** | **Material** | Cu | CuNi1 | CuNi1 | CuNi1 | CuNi1 |
| **Draht 6** | **Material** | Cu | CuNi1 | CuNi1 | CuNi1 | CuNi1 |
| **Draht 7** | **Material** | Cu | CuNi1 | CuNi1 | CuNi1 | CuNi1 |
| **Draht 8** | **Material** | CuNi1 | CuNi1 | CuNi1 | CuNi1 | CuNi1 |
| **Draht 9** | **Material** | CuNi1 | CuNi1 | CuNi1 | CuNi1 | CuNi1 |
| **Draht 10** | **Material** | CuNi1 | CuNi1 | CuNi1 | CuNi1 | CuNi1 |
| **Draht 11** | **Material** | CuNi1 | CuNi1 | CuNi1 | CuNi2 | CuNi1 |
| **Draht 12** | **Material** | CuNi1 | CuNi1 | CuNi1 | CuNi2 | CuNi2 |
| **Draht 13** | **Material** | CuNi1 | CuNi1 | CuNi2 | CuNi2 | CuNi10 |
| **Draht 14** | **Material** | CuNi2 | CuNi1 | CuNi2 | CuNi2 | CuNi10 |
| **Draht 15** | **Material** | CuNi2 | CuNi1 | CuNi2 | CuNi2 | CuNi10 |
| **Draht 16** | **Material** | CuNi2 | CuNi1 | CuNi2 | CuNi2 | CuNi10 |
| **Draht 17** | **Material** | CuNi2 | CuNi2 | CuNi2 | CuNi2 | CuNi10 |
| **Draht 18** | **Material** | CuNi2 | CuNi2 | CuNi6 | CuNi2 | CuNi10 |
| **Draht 19** | **Material** | CuNi6 | CuNi6 | CuNi6 | CuNi10 | CuNi15 |

In der nachstehenden Tabelle 4 finden sich mögliche Materialien der Einzeldrähte eines Teil-Heizelements mit siebenunddreißig verseilten Einzeldrähten für fünf Beispiele 1 bis 5 unterschiedlicher, mit den Kombinationen an Einzeldrähten aus den jeweils genannten Materialien erzielbarer längenbezogener Widerstände R.

**Tabelle 4:**

| | | **Beispiel 1** | **Beispiel 2** | **Beispiel 3** | **Beispiel 4** | **Beispiel 5** |
|---|---|---|---|---|---|---|
| **R [Ω/m]** | | 0,131 | 0,145 | 0,162 | 0,177 | 0,198 |
| **Draht 1** | **Material** | Cu | Cu | Cu | CuNi1 | CuNi1 |
| **Draht 2** | **Material** | Cu | CuNi1 | Cu | CuNi1 | CuNi1 |
| **Draht 3** | **Material** | Cu | CuNi1 | CuNi1 | CuNi1 | CuNi1 |
| **Draht 4** | **Material** | Cu | CuNi1 | CuNi1 | CuNi1 | CuNi1 |
| **Draht 5** | **Material** | Cu | CuNi1 | CuNi1 | CuNi1 | CuNi1 |
| **Draht 6** | **Material** | Cu | CuNi1 | CuNi1 | CuNi1 | CuNi1 |
| **Draht 7** | **Material** | Cu | CuNi1 | CuNi1 | CuNi1 | CuNi1 |
| **Draht 8** | **Material** | Cu | CuNi1 | CuNi1 | CuNi1 | CuNi1 |
| **Draht 9** | **Material** | Cu | CuNi1 | CuNi1 | CuNi1 | CuNi1 |
| **Draht 10** | **Material** | Cu | CuNi1 | CuNi1 | CuNi1 | CuNi1 |
| **Draht 11** | **Material** | Cu | CuNi1 | CuNi1 | CuNi1 | CuNi1 |
| **Draht 12** | **Material** | Cu | CuNi1 | CuNi1 | CuNi1 | CuNi1 |
| **Draht 13** | **Material** | Cu | CuNi1 | CuNi1 | CuNi1 | CuNi1 |
| **Draht 14** | **Material** | Cu | CuNi1 | CuNi1 | CuNi1 | CuNi1 |
| **Draht 15** | **Material** | CuNi1 | CuNi1 | CuNi1 | CuNi1 | CuNi2 |
| **Draht 16** | **Material** | CuNi1 | CuNi1 | CuNi1 | CuNi1 | CuNi2 |
| **Draht 17** | **Material** | CuNi1 | CuNi1 | CuNi1 | CuNi1 | CuNi2 |
| **Draht 18** | **Material** | CuNi1 | CuNi1 | CuNi1 | CuNi1 | CuNi2 |
| **Draht 19** | **Material** | CuNi1 | CuNi1 | CuNi1 | CuNi2 | CuNi2 |
| **Draht 20** | **Material** | CuNi1 | CuNi1 | CuNi1 | CuNi2 | CuNi2 |
| **Draht 21** | **Material** | CuNi1 | CuNi1 | CuNi1 | CuNi2 | CuNi2 |
| **Draht 22** | **Material** | CuNi1 | CuNi1 | CuNi1 | CuNi2 | CuNi2 |
| **Draht 23** | **Material** | CuNi1 | CuNi1 | CuNi1 | CuNi2 | CuNi2 |
| **Draht 24** | **Material** | CuNi1 | CuNi1 | CuNi1 | CuNi2 | CuNi2 |
| **Draht 25** | **Material** | CuNi1 | CuNi1 | CuNi1 | CuNi2 | CuNi2 |
| **Draht 26** | **Material** | CuNi1 | CuNi1 | CuNi2 | CuNi2 | CuNi2 |
| **Draht 27** | **Material** | CuNi2 | CuNi1 | CuNi2 | CuNi2 | CuNi2 |
| **Draht 28** | **Material** | CuNi2 | CuNi1 | CuNi2 | CuNi2 | CuNi2 |
| **Draht 29** | **Material** | CuNi2 | CuNi1 | CuNi2 | CuNi2 | CuNi2 |
| **Draht 30** | **Material** | CuNi2 | CuNi1 | CuNi2 | CuNi2 | CuNi2 |
| **Draht 31** | **Material** | CuNi2 | CuNi2 | CuNi2 | CuNi2 | CuNi2 |
| **Draht 32** | **Material** | CuNi2 | CuNi2 | CuNi6 | CuNi2 | CuNi2 |
| **Draht 33** | **Material** | CuNi2 | CuNi2 | CuNi6 | CuNi2 | CuNi2 |
| **Draht 34** | **Material** | CuNi6 | CuNi2 | CuNi6 | CuNi2 | CuNi2 |
| **Draht 35** | **Material** | CuNi6 | CuNi2 | CuNi10 | CuNi2 | CuNi6 |
| **Draht 36** | **Material** | CuNi6 | CuNi2 | CuNi10 | CuNi2 | CuNi6 |
| **Draht 37** | **Material** | CuNi6 | CuNi6 | CuNi10 | CuNi2 | CuNi10 |

Als zugfestes Stützelement 150 bzw. zugfeste Seele des jeweiligen Teil-Heizelements kann ein Kunststoffprofil oder z.B. ein Einzeldraht verwendet werden, so dass in letzterem Fall das Material des zugfesten Stützelements dann einem der Materialien aus den vorstehenden Tabellen 1 bis 4 entspricht. In letzterem Fall würde der Querschnitt durch das Teil-Heizelement sich von dem in Figur 14 gezeigten insofern unterscheiden, dass einer der Einzeldrähte im Innern als zugfestes Stützelement angeordnet wird und die anderen sechs Einzeldrähte um diesen herum verseilt sind. Die Einzeldrähte können alle denselben Außendurchmesser aufweisen.

Nachfolgend wird ein Auslegungsbeispiel für eine konfektionierte beheizbare Medienleitung mit zwei Leitungsverbindern 3, 4 beschrieben, wobei der Aufbau als sog. Zweilitzer (wie in den Figuren 1 bis 4, 10 und 12 zu sehen) ausgeführt ist, bei dem also zwei Teil-Heizelemente 50, 51 vorgesehen sind, wobei jeweils ein Teil-Heizelement 50, 51, das sich entlang der rohrförmigen Medienleitung 2 erstreckt, für einen der beiden Leitungsverbinder 3, 4 mit verwendet wird, wie dies in Figur 1 und 3 gezeigt ist. In der nachstehenden Tabelle 5 sind die Vorgaben der konfektionierten Medienleitung enthalten, wobei hierin zwei verschiedene Varianten I und II als Vorgaben einander gegenübergestellt sind.

**Tabelle 5:**

| Medienleitung mit zwei Leitungsverbindern, Aufbau als Zweilitzer | | | | |
|---|---|---|---|---|
| | I | | II | |
| Benötigte Leistung Leitungsverbinder 3 | 1,2 | W | 1,2 | W |
| Beispielhafte feste Heizelementlänge Leitungsverbinder 3, gegeben durch die Spurführung auf diesem | 400,0 | mm | 400 | mm |
| Benötigte Leistung Leitungsverbinder 4 | 1,8 | W | 1,8 | W |
| Beispielhafte feste Heizelementlänge Leitungsverbinder 4, gegeben durch die Spurführung auf diesem | 400 | mm | 400 | mm |
| Benötigte Leistung auf der Medienleitung (Rohrleitung) | 12,5 | W/M | 12,5 | W/M |
| Beispielhafter Rohrdurchmesser der Medienleitung | 4,05 | mm | 4,05 | mm |
| Beispielhafte nominale Betriebsspannung Spannung | 13,5 | V | 13,5 | V |
| Beispielhafte Medienleitungslänge | 4.700 | mm | 4.700 | mm |
| Basisleitungslänge für einen Meter | 1.000 | mm | 1.000 | mm |

In der nachstehenden Tabelle 5a sind der Durchmesser einer erfindungsgemäßen Mischlitze und deren beispielhafte, bevorzugte Querschnittsfläche genannt.

**Tabelle 5a:**

| | | |
|---|---|---|
| Durchmesser der Mischlitzen | 1,10 | mm |
| Bevorzugte reduzierte Querschnittsfläche | 0,20 | mm² |

Aus den beiden Tabellen 5 und 5a ergeben sich die folgenden, in den Tabellen 6 bis 6f wiedergegebenen und im Anschluss daran näher erläuterten Werte, wobei die in Tabellen 6 enthaltenen Werte für die Varianten I und II aus Tabelle 5 und 5a gelten, die in Tabelle 6a enthaltenen Werte für die Variante I, die in Tabelle 6b enthaltenen Werte für die Variante II, die in Tabelle 6c enthaltenen Werte für die Variante I, die in Tabelle 6d enthaltenen Werte für die Variante II, die in Tabelle 6e enthaltenen Werte für die Variante I und die in Tabelle 6f enthaltenen Werte für die Variante II gelten.

**Tabelle 6:**

| | | | |
|---|---|---|---|
| Benötigte Heizelementleistung für den Leitungsverbinder 3 | 3 | W/m | Ergibt sich durch Leistung am Leitungsverbinder 3 und Länge am Leitungsverbinder 3 |
| Benötigte Heizelementleistung für den Leitungsverbinder 4 | 4,5 | W/m | Ergibt sich durch Leistung am Leitungsverbinder 4 und Länge am Leitungsverbinder 4 |
| Notwendige Menge pro Heizelement auf der Medienleitung | 1,67 | M | Ergibt sich aus der Forderung Medienleitungsleistung / Leistung der beiden Litzen bzw. Teil-Heizelemente |
| Steigung der Heizelemente auf der Rohrleitung/Medienleitung | 12 | mm | Ergibt sich aus der Länge 1.000m, der notwendigen Heizelementlänge auf einem Meter Medienleitung und den Durchmessern für Medienleitung und Heizelement |
| Zu verwendende Gesamtmenge des ersten Teil-Heizelements auf dem Leitungsverbinder 3 (QC1) | 8.233 | mm | Menge des Heizelements für die Medienleitungslänge + Länge am QC 1 |
| Zu verwendende Gesamtmenge des zweiten Teil-Heizelements auf dem Leitungsverbinder 4 (QC2) | 8.233 | mm | Menge des Heizelements für die Medienleitungslänge + Länge am QC 2 |
| Zu erzeugende Leistung mit dem ersten Heizelement | 25 | | Länge erstes Heizelement x Leistung auf diesem Heizelement |
| Zu erzeugende Leistung mit dem zweiten Heizelement | 37 | | Länge zweites Heizelement x Leistung auf diesem Heizelement |
| Erzeugte Gesamtleistung | 61,8 | W | Summe der beiden Heizelementleistungen |
| Benötigter Strom | 4,57 | A | Leistung / Spannung |
| Durch erstes Heizelement zu erzeugender Widerstand | 1,18 | Ohm | I =P/I² |
| Durch zweites Heizelement zu erzeugender Widerstand | 1,77 | Ohm | I =P/I² |
| Summenwiderstand | 2,95 | Ohm | Medienleitungswiderstand erzeugt durch beide Heizelemente |

**Tabelle 6a:**

| | | | |
|---|---|---|---|
| Benötigter spezifischer Heizelementwiderstand 1 | 0,143 | Ohm/m | Ergibt sich aus dem Widerstand von erstem Heizelement und der zu verwendenden Menge |
| Benötigter Spezifischer Heizelementwiderstand 2 | 0,215 | Ohm/m | Ergibt sich aus dem Widerstand von zweitem Heizelement und der zu verwendenden Menge |

**Tabelle 6b:**

| | | | |
|---|---|---|---|
| Benötigter Spezifischer Heizelementwiderstand 1 | 0,215 | Ohm/m | Ergibt sich aus Widerstand von erstem Heizelement und der zu verwendenden Menge |
| Benötigter Spezifischer Heizelementwiderstand 2 | 0,358 | Ohm/m | Ergibt sich aus Widerstand von zweitem Heizelement und der zu verwendenden Menge |

**Tabelle 6c:**

| | | | | | |
|---|---|---|---|---|---|
| Damit möglicher Querschnitt für erstes Heizelement | 0,119 | mm² | Mit | Cu | Nur aus einem Material |
| Damit möglicher Querschnitt für erstes Heizelement | 0,174 | mm² | Mit | CuNi 1 | Nur aus einem Material |
| Damit möglicher Querschnitt für erstes Heizelement | 0,349 | mm² | Mit | CuNi 2 | Nur aus einem Material |
| Damit möglicher Querschnitt für zweites Heizelement | 0,116 | mm² | Mit | CuNi 1 | Nur aus einem Material |
| Damit möglicher Querschnitt für zweites Heizelement | 0,232 | mm² | Mit | CuNi 2 | Nur aus einem Material |
| Damit möglicher Querschnitt für zweites Heizelement | 0,465 | mm² | Mit | CuNi 6 | Nur aus einem Material |

**Tabelle 6d:**

| | | | | | |
|---|---|---|---|---|---|
| Damit möglicher Querschnitt für erstes Heizelement | 0,116 | mm² | Mit | CuNi 1 | Nur aus einem Material |
| Damit möglicher Querschnitt für erstes Heizelement | 0,232 | mm² | Mit | CuNi 2 | Nur aus einem Material |
| Damit möglicher Querschnitt für erstes Heizelement | 0,465 | mm² | Mit | CuNi 6 | Nur aus einem Material |
| Damit möglicher Querschnitt für zweites Heizelement | 0,139 | mm² | Mit | CuNi 2 | Nur aus einem Material |
| Damit möglicher Querschnitt für zweites Heizelement | 0,279 | mm² | Mit | CuNi 6 | Nur aus einem Material |
| Damit möglicher Querschnitt für zweites Heizelement | 0,418 | mm² | Mit | CuNi 10 | Nur aus einem Material |

**Tabelle 6e:**

| | | | | |
|---|---|---|---|---|
| Widerstand des ersten Teil-Heizelements (Litze) mit 0,20mm² | 0,145 | Ohm/m | Mit | 6xCuNi 1 |
| | | | | 1xCuNi 6 |
| Widerstand des zweiten Teil-Heizelements (Litze) mit 0,20mm² | 0,218 | Ohm/m | Mit | 4xCuNi 2 |
| | | | | 2xCuNi 1 |
| | | | | 1xCuNi 10 |

**Tabelle 6f:**

| | | | | |
|---|---|---|---|---|
| Widerstand des ersten Teil-Heizelements (Litze) mit 0,20mm² | 0,218 | Ohm/m | Mit | 4xCuNi 2 |
| | | | | 2xCuNi 1 |
| | | | | 1xCuNi 10 |
| Widerstand des zweiten Teil-Heizelements (Litze) mit 0,20mm² | 0,358 | Ohm/m | Mit | 4xCuNi 2 |
| | | | | 1×CuNi 6 |
| | | | | 1×CuNi 10 |
| | | | | 1×CuNi 15 |

In der nachstehenden Tabelle 7 sind die jeweiligen spezifischen Widerstände der in den vorstehenden Tabellen genannten Materialien genannt:

**Tabelle 7:**

| Materialien / Legierungen | Material | Spezifischer Widerstand [Ohm*mm²/m] |
|---|---|---|
| | Cu | 0,017 |
| | CuNi 1 | 0,025 |
| | CuNi 2 | 0,050 |
| | CuNi 6 | 0,100 |
| | CuNi 10 | 0,150 |
| | CuNi 15 | 0,210 |
| | CuNi 23 | 0,300 |
| | CuNi 30 | 0,400 |
| | CuNi 44 | 0,490 |
| | NiCr3020 | 1,040 |

Die am ersten Leitungsverbinder 3 benötigte Leistung P₃ beträgt z.B. P₃ = 1,2 W.

Die beispielhafte feste Teil-Heizelementlänge I₃ am Leitungsverbinder 3, die durch die Spurführung in der Rippenstruktur auf dessen Außenseite vorgegeben ist, beträgt I₃ = 400,00 mm. Die am zweiten Leitungsverbinder 4 benötigte Leistung P₄ beträgt z.B. P₄ = 1,8 W. Die beispielhafte feste Teil-Heizelementlänge I₄ am Leitungsverbinder 4, die durch die Spurführung in der Rippenstruktur auf dessen Außenseite vorgegeben ist, beträgt ebenfalls I₄ = 400,00 mm. Die auf der rohrförmigen Medienleitung 2 benötigte Leistung P₂ beträgt z.B. P₂ = 12,5 W/m, der Medienleitungsdurchmesser d₂ z.B. d₂ = 4,05 mm. Die beispielhafte nominale Betriebsspannung U beträgt U = 13,5 V. Die Leitungslänge L beträgt z.B. L = 4.700 mm, die Basisleitungslänge für einen Meter 1.000 mm.

Der Durchmesser d_{50,51} der als Mischlitzen ausgebildeten Teil-Heizelemente 50, 51 soll d_{50,51} = 1,10 mm (=Litzendurchmesser inklusive Isolation) und die bevorzugte Querschnittsfläche A_{50,51} von dieser A_{50,51} = 0,20 mm² betragen. Letzteres ist die Querschnittsfläche der metallischen Teile der Einzeldrähte, also ohne deren Isolationsummantelung.

Hieraus ergibt sich die (Teil-)Heizelementleistung P₅₀ für den ersten Leitungsverbinder 3 aus der Leistung P₃ am ersten Leitungsverbinder 3 zu der Länge I₃ des Teil-Heizelements 50 am ersten Leitungsverbinder zu P₅₀ = 3 W/m.

Die (Teil-) Heizelementleistung P₅₁ für den zweiten Leitungsverbinder 4 ergibt sich aus der Leistung P₄ am zweiten Leitungsverbinder 4 zu der Länge I₄ des Teil-Heizelements am zweiten Leitungsverbinder 4 zu P₅₁ = 4,5 W/m. Die notwendige Länge I pro Teil-Heizelement auf der Medienleitung 2 ergibt sich aus dem Verhältnis der Leitungsleistung P₂ zu der Summe der Leistungen P₅₀, P₅₁ der beiden Teil-Heizelemente 50, 51 zu I = 1,67 m. Die erforderliche Steigung s der Teil-Heizelemente 50, 51 auf der rohrförmigen Medienleitung 2 ergibt sich aus der Basisleitungslänge von 1.000 mm, der notwendigen Länge I pro Teil-Heizelement auf einem Meter Leitung und den Durchmessern d₂, d_{50,51} der rohrförmigen Medienleitung 2 und der als Mischlitzen ausgebildeten Teil-Heizelemente 50, 51 zu s = 12 mm. Die zu verwendende Gesamtlänge L_{50ges} an Teil-Heizelement 50 (am Leitungsverbinder 3) ergibt sich aus der Länge I an Teil-Heizelement 50 für das Umwickeln der rohrförmigen Medienleitung 2, der Länge L der Leitung und der Länge I₃ am Leitungsverbinder 3 zu L_{50ges} = 8.233 mm. Die zu verwendende Gesamtlänge L_{51ges} an Teil-Heizelement 51 (am Leitungsverbinder 4) ergibt sich aus der Länge I an Teil-Heizelement 50 für das Umwickeln der rohrförmigen Medienleitung 2, der Länge L der Leitung und der Länge I₄ am Leitungsverbinder 4 zu L_{51ges} = 8.233 mm.

Die zu erzeugende Leistung P_{50ges} mit dem Teil-Heizelement 50 ergibt sich aus Länge L_{50ges} am Teil-Heizelement 50 multipliziert mit der Leistung P₅₀ am Teil-Heizelement 50 zu P_{50ges} = 25 W. Die zu erzeugende Leistung P_{51ges} mit dem Teil-Heizelement 51 ergibt sich aus Länge L_{51ges} am Teil-Heizelement 51 multipliziert mit der Leistung P₅₁ am Teil-Heizelement 51 zu P_{51ges} = 37 W. Die Gesamtleistung beider Teil-Heizelemente 50, 51 ergibt sich aus der Summe der beiden Leistungen P_{50ges} und P_{51ges} zu P_{50,51ges} = 61,8 W. Der benötigte Strom I beträgt somit I = 4,57 A. Hieraus errechnet sich der durch das Teil-Heizelement 50 zu erzeugender Widerstand R₅₀ aus der Leistung P_{50ges} zu dem Quadrat des Stroms I zu R₅₀ = 1,18 Ω, der durch das Teil-Heizelement 51 zu erzeugende Widerstand R₅₁ aus der Leistung P_{51ges} zu dem Quadrat des Stroms I zu R₅₁ = 1,77 Ω. Die Summe der Widerstände R₅₀ und R₅₁ beträgt somit R_{50,51} = 2,95 Ω. Der benötigte längenspezifische Widerstand R_{L50} des Teil-Heizelements 50 ergibt sich aus dem Widerstand R₅₀ und der zu verwendenden Teil-Heizelementlänge L_{50ges} zu R_{L50} = 0,143 Ω/m. Der benötigte längenspezifische Widerstand R_{L51} des Teil-Heizelements 51 ergibt sich aus dem Widerstand R₅₁ und der zu verwendenden Teil-Heizelementlänge L_{51ges} zu R_{L51} = 0,215 Ω/m.

Hieraus ergäbe sich eine mögliche Querschnittsfläche A₅₀ für das Teil-Heizelement 50 von A₅₀ = 0,119 mm², wenn diese nur aus einem Material, hier aus Cu bestünde, oder A₅₀ = 0,174 mm², wenn diese nur aus einem Material, hier aus CuNi1 bestünde, oder A₅₀ = 0,349 mm², wenn diese nur aus einem Material, hier aus CuNi2 bestünde. Hieraus ergäbe sich ferner eine mögliche Querschnittsfläche A₅₁ für das Teil-Heizelement 51 von A₅₁ = 0,116 mm², wenn diese nur aus einem Material, hier aus CuNi1 bestünde, oder A₅₁ = 0,232 mm², wenn diese nur aus einem Material, hier aus CuNi2 bestünde, oder A₅₁ = 0,465 mm², wenn diese nur aus einem Material, hier aus CuNi6 bestünde. Die erste und zweite Auslegung für das erste Teil-Heizelement 50 wären somit zu klein und die dritte würde einen zu hohen Materialverbrauch bedeuten. Für das zweite Teil-Heizelement 51 wäre die erste Auslegung zu klein, die beiden letztgenannten Auslegungen würden oder zumindest die letztgenannte Auslegung würde zu einem zu hohen Materialverbrauch und somit zu erhöhten Kosten führen. Zudem wäre der Außendurchmesser inklusive Isolation ggf. zu groß, so dass ein Einschieben in eine enge Schutzhülle, wie ein enges Isolationsrohr, z.B. ein Wellrohr, nicht möglich wäre und ggf. daher ein größerer Schutzhüllendurchmesser bzw. Wellrohrdurchmesser verwendet werden müsste.

Daher werden die beiden Teil-Heizelemente 50, 51 erfindungsgemäß als Mischlitze ausgebildet. Der längenbezogene Widerstand R_{50/20} des als Mischlitze ausgebildeten Teil-Heizelements 50 mit einer Querschnittsfläche von A₅₀ = 0,20 mm² beträgt dabei beispielsweise R_{50/20} = 0,145 Ω/m bei Verwenden von sieben verseilten Einzeldrähten, von denen sechs aus CuNi1 bestehen und einer aus CuNi6 besteht. Der längenbezogene Widerstand R_{51/20} des als Mischlitze ausgebildeten Teil-Heizelements 51 mit einer Querschnittsfläche von A₅₁ = 0,20 mm² beträgt beispielsweise R_{51/20} = 0,218 Ω/m bei Verwenden von sieben verseilten Einzeldrähten, von denen vier aus CuNi2 bestehen, zwei aus CuNi1 bestehen und einer aus CuNi10 besteht. Selbstverständlich sind auch andere Materialkombinationen der Einzeldrähte zum Erzielen eines Teil-Heizelements mit einem gewünschten spezifischen Widerstand bei einer vorgegebenen Querschnittsfläche des Teil-Heizelements möglich. Insbesondere können hierbei Kupfer-Zink-Legierungen bzw. Kupfer-Zinn-Legierungen für einen oder mehrere Einzeldrähte verwendet werden. Bei sieben Einzeldrähten mit jeweils einem Außendurchmesser des metallischen Teils, also ohne Isolationsummantelung, von 0,19 mm ergibt sich eine Querschnittfläche von 0,19² · pi/4 = 0,028 mm² pro Einzeldraht bzw. 0,028 mm² · 7 = 0,2 mm² Gesamtquerschnittsfläche der Mischlitze. Somit ist es bei einer vorgegebenen oder vorgebbaren Querschnittsfläche oder Querschnitt des Teil-Heizelements von beispielsweise 0,2 mm² der beiden zu verbindenden Teil-Heizelemente möglich, einen gewünschten Widerstand durch geeignete Wahl der Einzeldrähte der Mischung aus Einzeldrähten auszuwählen bzw. zu konfigurieren.

Durch die Verwendung einer Mischlitze als Teil-Heizelement und der geeigneten Reihenschaltung von zumindest zwei Teil-Heizelementen zu einem konfektionierten Heizelement ist es somit möglich, den Gesamtwiderstand von diesem so einzustellen, dass die Heizleistung über die Erstreckung der konfektionierten beheizbaren Medienleitung hinweg anwendungsspezifisch optimal eingestellt werden kann, somit insbesondere in den Bereichen, in denen nur eine geringe Heizleistung erforderlich ist, lediglich eine solche zur Verfügung gestellt wird, während in den Bereichen, in denen eine hohe Heizleistung erforderlich ist, um ein eingefrorenes Medium in der konfektionierten beheizbaren Medienleitung aufzutauen oder ein Medium dort an einem Einfrieren zu hindern, eine geeignet hohe Heizleistung zur Verfügung gestellt wird.

Neben den im Vorstehenden genannten und in den Figuren gezeigten Ausführungsvarianten von konfektionierten beheizbaren Medienleitungen und konfektionierten Heizelementen können noch zahlreiche weitere vorgesehen werden, auch beliebige Kombinationen der genannten Merkmale, wobei zumindest eine rohr- und/oder schlauchförmige Medienleitung, zumindest ein endseitig an dieser angeordneter Leitungsverbinder und zumindest ein konfektioniertes Heizelement vorgesehen sind, das zumindest zwei Teil-Heizelemente umfasst, die in zumindest einer Schaltung verbunden sind, wobei zumindest eines der Teil-Heizelemente als Mischlitze ausgebildet ist, die eine Anzahl von verseilten, aus zumindest zwei unterschiedlichen Materialien bestehenden Einzeldrähten aufweist.

### Bezugszeichenliste

- 1: konfektionierte beheizbare Medienleitung
- 2: rohrförmige Medienleitung
- 3: Leitungsverbinder
- 4: Leitungsverbinder
- 5: konfektioniertes Heizelement
- 6: elektrischer Zuleiter
- 7: elektrischer Zuleiter
- 20: Übergangsbereich
- 21: Übergangsbereich
- 22: Leitungswandung
- 23: Fixierband
- 30: Nut
- 31: Rippe
- 32: Rippe
- 50: Teil-Heizelement
- 51: Teil-Heizelement
- 52: Verbindungsstelle/Crimpstelle
- 53: Ende von 50
- 54: Ende von 51
- 55: Ende von 50
- 56: Ende von 51
- 57: Verbindungsstelle/Crimpstelle
- 58: Teil-Heizelement
- 59: Teil-Heizelement
- 123: Folienelement
- 150: zugfestes Stützelement / zugfeste Seele
- 151: Einzeldraht
- 152: Einzeldraht
- 153: Einzeldraht
- 154: Einzeldraht
- 155: Einzeldraht
- 156: Einzeldraht
- 157: Einzeldraht
- 158: Schutzmantel
- 580: Ende von 58
- 581: Ende von 58
- 590: Ende von 59
- 591: Ende von 59
- I_{S}: Schlaglänge
- d₅: Außendurchmesser von 5
- d₅ₐ: Außendurchmesser von 5
- d_{5b}: Außendurchmesser von 5

## Patentansprüche

1. Konfektionierte beheizbare Medienleitung (1) mit zumindest einer rohr-und/oder schlauchförmigen Medienleitung (2), zumindest einem endseitig an dieser angeordneten Leitungsverbinder (3,4) und mit zumindest einem konfektionierten Heizelement (5), wobei das konfektionierte Heizelement (5) zumindest zwei Teil-Heizelemente (50,51,58,59) umfasst, die in zumindest einer Schaltung verbunden sind, und zumindest eines der Teil-Heizelemente (50,51) sich über zumindest einen Teil des zumindest einen Leitungsverbinders (3,4) und die zumindest eine rohr- und/oder schlauchförmige Medienleitung (2) hinweg erstreckt zum Beheizen des zumindest einen Teils des Leitungsverbinders (3,4) und der zumindest einen rohr- und/oder schlauchförmigen Medienleitung (2),
**dadurch gekennzeichnet, dass**
im Übergangsbereich zwischen Medienleitung (2) und Leitungsverbinder (3, 4) keine Crimpstelle oder anderweitige Verbindungsstelle zwischen den Teil-Heizelementen (50, 51, 58, 59) vorgesehen ist,
wobei zumindest eines der Teil-Heizelemente (50,51,58,59) als Mischlitze ausgebildet ist, die eine Anzahl von um ein zugfestes Stützelement (150) verseilten, aus zumindest zwei unterschiedlichen Materialien bestehenden Einzeldrähten (151,152,153,154,155,156,157) aufweist,
wobei die Mischlitze aus 7, 19 oder 37 Einzeldrähten gebildet ist und als zugfestes Stützelement einer der Einzeldrähte dient,
wobei zumindest ein Einzeldraht aus einer Kupfer-Nickel-Legierung und zumindest einer der weiteren Einzeldrähte aus Kupfer oder einer Nickel-Chrom-Legierung besteht, und
wobei die Einzeldrähte den gleichen Drahtdurchmesser aufweisen.

2. Konfektionierte beheizbare Medienleitung (1) nach Anspruch 1,
**dadurch gekennzeichnet, dass**
zwei miteinander verbundene Teil-Heizelemente (50,51,58,59) die gleichen Querschnittsflächen aufweisen.

3. Konfektionierte beheizbare Medienleitung (1) nach Anspruch 1 oder 2,
**dadurch gekennzeichnet, dass**
zwei miteinander verbundene Teil-Heizelemente (50,51,58,59) jeweils eine minimale Querschnittsfläche von 0,15 mm² aufweisen, insbesondere eine Querschnittsfläche von 0,2 mm².

4. Konfektionierte beheizbare Medienleitung (1) nach einem der vorstehenden Ansprüche,
**dadurch gekennzeichnet, dass**
die zumindest eine rohr- und/oder schlauchförmige Medienleitung (2) und der zumindest eine Leistungsverbinder (3,4) mit dem zumindest einen konfektionierten Heizelement (5) adaptiv umwickelt sind, wobei eine Außenbewicklung der rohr- und/oder schlauchförmigen Medienleitung (2) und des zumindest einen endseitig an dieser angeordneten Leitungsverbinders (3,4) vorgesehen ist und auch der Übergangsbereich zwischen Medienleitung (2) und Leitungsverbinder (3,4) unterbrechungsfrei bewickelt ist und ein oder zwei Teil-Heizelemente (50,51,58,59) in diesem Übergangsbereich zwischen Medienleitung (2) und Leitungsverbinder (3,4) übergangs- bzw. unterbrechungsfrei angeordnet sind.

5. Konfektionierte beheizbare Medienleitung (1) nach einem der vorstehenden Ansprüche,
**dadurch gekennzeichnet, dass**
zumindest einer der verseilten Einzeldrähte (151,152,153,154,155,156, 157) des zumindest einen Teil-Heizelements (50,51,58,59) aus einer Kupfer-Zink-Legierung oder einer Kupfer-Zinn-Legierung besteht.

6. Konfektionierte beheizbare Medienleitung (1) nach einem der vorstehenden Ansprüche,
**dadurch gekennzeichnet, dass**
das konfektionierte Heizelement (5) zwei oder drei Teil-Heizelemente (50,51,58,59) umfasst.

7. Konfektionierte beheizbare Medienleitung (1) nach einem der vorstehenden Ansprüche,
**dadurch gekennzeichnet, dass**
das zumindest eine als Mischlitze ausgebildete Teil-Heizelement (50,51,58,59) sieben verseilte Einzeldrähte (151,152,153,154,155,156,157) umfasst.

8. Konfektionierte beheizbare Medienleitung (1) nach einem der vorstehenden Ansprüche,
**dadurch gekennzeichnet, dass**
die Schlaglänge (I_{S}) beim Verseilen der Einzeldrähte (151,152,153,154, 155,156,157) zu dem zumindest einen Teil-Heizelement (50,51,58,59) 6 bis 15 mm, insbesondere 9 mm, beträgt.

9. Konfektionierte beheizbare Medienleitung (1) nach einem der vorstehenden Ansprüche,
**dadurch gekennzeichnet, dass**
das konfektionierte Heizelement (5) zumindest zwei durch Reihenschaltung miteinander verbundene Teil-Heizelemente (50,51,58,59) umfasst.

10. Konfektionierte beheizbare Medienleitung (1) nach Anspruch 9,
**dadurch gekennzeichnet, dass**
das zumindest eine als Mischlitze ausbildete Teil-Heizelement (50,51,58,59) eine Querschnittsfläche von 0,15 bis 0,37 mm² aufweist, insbesondere eine Querschnittsfläche von 0,17 bis 0,23 mm², insbesondere von 0,20 mm².

11. Verfahren zum Fixieren zumindest eines konfektionierten Heizelements (5) auf einer Medienleitung (2) zum Ausbilden einer konfektionierten beheizbaren Medienleitung nach einem der Ansprüche 9 oder 10,
**dadurch gekennzeichnet, dass**
zumindest eine rohr- und/oder schlauchförmigen Medienleitung (2) mit zumindest einem konfektionierten Heizelement (5) versehen und das zumindest eine konfektionierte Heizelement (5) durch zumindest partielles Umwickeln der mit diesem versehenen Medienleitung (2) mit zumindest einem Folienelement (123) auf dieser fixiert wird und die mit dem zumindest einen konfektionierten Heizelement (5) und dem zumindest einen Folienelement (123) versehene Medienleitung (2) erwärmt wird zum besseren Einbetten des konfektionierten Heizelements (5) in dem Folienelement (123) und besseren Anlegen von diesem an der Außenseite der Medienleitung (2).

12. Verfahren nach Anspruch 11,
**dadurch gekennzeichnet, dass**
das zumindest eine Folienelement (123) beim Bewickeln der Medienleitung (2) mit dem darauf angeordneten zumindest einen Heizelement (5) verstreckt und/oder überdehnt und/oder plastisch verformt wird.

## Claims

1. Prefabricated heatable media line (1) having at least one tube- and/or hose-like media line (2), at least one line connector (3, 4) arranged at an end thereof, and having at least one prefabricated heating element (5), wherein the prefabricated heating element (5) comprises at least two partial heating elements (50, 51, 58, 59) which are connected in at least one circuit, and at least one of the partial heating elements (50, 51) extends over at least one portion of the at least one line connector (3, 4) and the at least one tube- and/or hose-like media line (2) in order to heat the at least one portion of the line connector (3, 4) and the at least one tube- and/or hose-like media line (2),
**characterised in that**
no crimp zone or other connecting zone between the partial heating elements (50, 51, 58, 59) is provided in the transition region between the media line (2) and the line connector (3, 4),
wherein at least one of the partial heating elements (50, 51, 58, 59) is in the form of a mixed conductor strand which has a plurality of single wires (151, 152, 153, 154, 155, 156, 157) consisting of at least two different materials which are twisted around a high-tensile support element (150),
wherein the mixed conductor strand is formed of 7, 19 or 37 single wires and one of the single wires serves as the high-tensile support element,
wherein at least one single wire consists of a copper-nickel alloy and at least one of the further single wires consists of copper or a nickel-chromium alloy, and
wherein the single wires have the same wire diameter.

2. Prefabricated heatable media line (1) according to claim 1,
**characterised in that**
two partial heating elements (50, 51, 58, 59) which are connected together have the same cross-sectional areas.

3. Prefabricated heatable media line (1) according to claim 1 or 2,
**characterised in that**
two partial heating elements (50, 51, 58, 59) which are connected together each have a minimum cross-sectional area of 0.15 mm², in particular a cross-sectional area of 0.2 mm².

4. Prefabricated heatable media line (1) according to any one of the preceding claims, **characterised in that**
the at least one tube- and/or hose-like media line (2) and the at least one line connector (3, 4) are adaptively wrapped with the at least one prefabricated heating element (5), wherein an outer wrapping of the tube- and/or hose-like media line (2) and of the at least one line connector (3, 4) arranged at an end thereof is provided and also the transition region between the media line (2) and the line connector (3, 4) is wrapped without interruption and one or two partial heating elements (50, 51, 58, 59) are arranged without any transition or interruption in this transition region between the media line (2) and the line connector (3, 4).

5. Prefabricated heatable media line (1) according to any one of the preceding claims, **characterised in that**
at least one of the twisted single wires (151, 152, 153, 154, 155, 156, 157) of the at least one partial heating element (50, 51, 58, 59) consists of a copper-zinc alloy or a copper-tin alloy.

6. Prefabricated heatable media line (1) according to any one of the preceding claims, **characterised in that**
the prefabricated heating element (5) comprises two or three partial heating elements (50, 51, 58, 59).

7. Prefabricated heatable media line (1) according to any one of the preceding claims, **characterised in that**
the at least one partial heating element (50, 51, 58, 59) in the form of a mixed conductor strand comprises seven twisted single wires (151, 152, 153, 154, 155, 156, 157).

8. Prefabricated heatable media line (1) according to any one of the preceding claims, **characterised in that**
the lay length (Iₛ) on twisting of the single wires (151, 152, 153, 154, 155, 156, 157) to form the at least one partial heating element (50, 51, 58, 59) is from 6 to 15 mm, in particular 9 mm.

9. Prefabricated heatable media line (1) according to any one of the preceding claims, **characterised in that**
the prefabricated heating element (5) comprises at least two partial heating elements (50, 51, 58, 59) connected together by a series connection.

10. Prefabricated heatable media line (1) according to claim 9,
**characterised in that**
the at least one partial heating element (50, 51, 58, 59) in the form of a mixed conductor strand has a cross-sectional area of from 0.15 to 0.37 mm², in particular a cross-sectional area of from 0.17 to 0.23 mm², in particular of 0.20 mm².

11. Method for fixing at least one prefabricated heating element (5) to a media line (2) to form a prefabricated heatable media line according to either claim 9 or claim 10, **characterised in that**
at least one tube- and/or hose-like media line (2) is provided with at least one prefabricated heating element (5) and the at least one prefabricated heating element (5) is fixed to the media line (2) by at least partial wrapping of the media line provided with the prefabricated heating element with at least one film element (123), and the media line (2) provided with the at least one prefabricated heating element (5) and the at least one film element (123) is heated in order better to embed the prefabricated heating element (5) in the film element (123) and better apply the film element to the outer side of the media line (2).

12. Method according to claim 11,
**characterised in that**
the at least one film element (123), on wrapping of the media line (2) with the at least one heating element (5) arranged thereon, is stretched and/or overextended and/or plastically deformed.

## Revendications

1. Conduite de fluide chauffante préfabriquée (1) avec au moins une conduite de fluide tubulaire et/ou en forme de tuyau (2), au moins un raccord de conduite (3, 4) disposé à son extrémité et avec au moins un élément chauffant préfabriqué (5), l'élément chauffant préfabriqué (5) comprenant au moins deux parties d'éléments chauffants (50, 51, 58, 59) qui sont reliées à au moins un circuit, et au moins l'une des parties d'éléments chauffants (50, 51) s'étend jusqu'à au moins une partie de l'au moins un raccord de conduite (3, 4) et dans l'au moins une conduite de fluide tubulaire et/ou en forme de tuyau (2) pour chauffer au moins une partie de l'au moins un raccord de conduite (3, 4) et l'au moins une conduite de fluide tubulaire et/ou en forme de tuyau (2),
**caractérisée en ce que**
dans la zone de transition entre la conduite (2) et le raccord de conduite (3, 4), il n'y a ni point de sertissage ni autre point de connexion entre les parties d'éléments chauffants (50, 51, 58, 59), et
au moins une des parties d'éléments chauffants (50, 51, 58, 59) est réalisée sous la forme d'un toron mixte, qui présente un certain nombre de torons individuels constitués d'au moins deux matériaux différents (151, 152, 153, 154, 155, 156, 157), dont l'un (150) présente une résistance à la traction, et
le toron mixte est formé de 7, 19 ou 37 torons individuels dont l'un présente une résistance à la traction, et
au moins l'un des torons individuels est formé d'un alliage de cuivre et de nickel, et au moins un autre toron individuel est formé de cuivre ou d'un alliage de nickel et de chrome, et
les torons individuels présentent le même diamètre de toron.

2. Conduite de fluide chauffante préfabriquée (1) selon la revendication 1, **caractérisée en ce que** deux parties d'éléments chauffants interconnectés (50, 51, 58, 59) ont les mêmes sections transversales.

3. Conduite de fluide chauffante préfabriquée (1) selon la revendication 1 ou 2, **caractérisée en ce que** deux parties d'éléments chauffants interconnectés (50, 51, 58, 59) ont chacune une section transversale minimale de 0,15 mm², en particulier une section transversale de 0,2 mm².

4. Conduite de fluide chauffante préfabriquée (1) selon l'une des revendications précédentes, **caractérisée** en ce l'au moins une conduite de fluide tubulaire et/ou en forme de tuyau (2) et l'au moins un raccord de conduite (3, 4) sont enveloppés de manière adaptative avec l'au moins un élément chauffant préfabriqué (5), et un enroulement externe sur la conduite de fluide tubulaire et/ou en forme de tuyau (2) et sur l'au moins un raccord de conduite (3, 4) disposé à au moins une extrémité de cette dernière, est prévu, et la zone de transition entre la conduite de fluide (2) et le raccord de conduite (3, 4) est également enroulée sans interruption, et une ou deux parties d'éléments chauffants (50, 51, 58, 59) sont disposées dans cette zone de transition entre la conduite de fluide (2) et le raccord de conduite (3, 4) sans transition ni interruption.

5. Conduite de fluide chauffante préfabriquée (1) selon l'une des revendications précédentes, **caractérisée en ce qu'**au moins un des torons individuels (151, 152, 153, 154, 155, 156, 157) d'au moins une partie d'élément chauffant (50, 51, 58, 59) est constitué d'un alliage cuivre-zinc ou d'un alliage cuivre-étain.

6. Conduite de fluide chauffante préfabriquée (1) selon l'une des revendications précédentes, **caractérisée en ce que** l'élément chauffant préfabriqué (5) comprend deux ou trois parties d'éléments chauffants (50, 51, 58, 59).

7. Conduite de fluide chauffante préfabriquée (1) selon l'une des revendications précédentes, **caractérisée en ce que** l'au moins une partie d'élément chauffant (50, 51, 58, 59) conçue comme un toron mixte comprend sept torons individuels (151, 152, 153, 154, 155, 156, 157).

8. Conduite de fluide chauffante préfabriquée (1) selon l'une des revendications précédentes, **caractérisée en ce que** la longueur de pas (Iₛ) lors du vrillage des torons individuels (151, 152, 153, 154, 155, 156, 157) de l'au moins une partie d'élément chauffant (50, 51, 58, 59) est de 6 à 15 mm, en particulier de 9 mm.

9. Conduite de fluide chauffante préfabriquée (1) selon l'une des revendications précédentes, **caractérisée en ce que** l'élément chauffant préfabriqué (5) comprend au moins deux parties d'éléments chauffants (50, 51, 58, 59) reliées l'une à l'autre.

10. Conduite de fluide chauffante préfabriquée (1) selon la revendication 9, **caractérisée en ce que** l'au moins une partie de l'élément chauffant conçue comme un toron mixte (50, 51, 58, 59) a une section de 0,15 à 0,37 mm², en particulier une section de 0,17 à 0,23 mm², en particulier de 0,20 mm².

11. Procédé de fixation d'au moins un élément chauffant préfabriqué (5) sur une conduite de fluide (2) pour former une conduite de fluide chauffante selon l'une des revendications 9 ou 10, **caractérisé en ce que** au moins une conduite de fluide tubulaire et/ou en forme de tuyau (2) pourvue d'au moins un élément chauffant préfabriqué (5) est fournie, et l'au moins un élément chauffant préfabriqué (5) est enveloppé au moins partiellement sur la conduite fluide (2) avec au moins un élément de film (123) sur lequel il est fixé, et on chauffe la conduite de fluide (2) munie de l'élément chauffant préfabriqué (5) et de l'élément de film (123) pour une meilleure intégration de l'élément chauffant préfabriqué (5) dans l'élément de film (123) et le meilleur placement de celui-ci sur la surface extérieure de la conduite de fluide (2).

12. Procédé selon la revendication 11, **caractérisé en ce que** l'au moins un élément de film (123) est étiré et/ou sur-étiré et/ou déformé plastiquement lorsque la conduite de fluide (2) est enroulée avec l'au moins un élément chauffant (5) disposé dessus.
